Europäisches Patentamt

(19) European Patent Office

Office européen des brevets

(11) Numéro de publication : **0 175 410**
**B1**

(12) **FASCICULE DE BREVET EUROPÉEN**

(45) Date de publication du fascicule du brevet :
02.11.89

(21) Numéro de dépôt : **85201377.0**

(22) Date de dépôt : **30.08.85**

(51) Int. Cl.⁴ : **H 04 L 27/00,** H 04 L 27/18

(54) **Circuit d'interface analogique monolithique entre un processeur de signal et un réseau de télécommunication.**

(30) Priorité : 07.09.84 FR 8413772

(43) Date de publication de la demande :
26.03.86 Bulletin 86/13

(45) Mention de la délivrance du brevet :
02.11.89 Bulletin 89/44

(84) Etats contractants désignés :
BE CH DE FR GB IT LI NL SE

(56) Documents cités :
GB-A- 2 116 406
US-A- 4 466 106
IEEE JOURNAL OF SOLID-STATE CIRCUITS, vol. SC-17, no. 6, décembre 1982, pages 1039-1044, IEEE, New York, US; Y. KURAISHI et al.: "A single-chip NMOS analog front-end LSI for modems"
IEEE INTERNATIONAL CONFERENCE ON COMMUNICATIONS, CONFERENCE RECORD vol. 1 de 3, 19-22 Juin 1983, Boston, Massachusetts, US, pages 187-191, IEEE, New York, US; T. TSUDA et al.: "A high performance LSI digital signal processor for communication"
NACHRICHTENTECHNISCHE ZEITSCHRIFT N.T.Z., vol. 36, no. 11, novembre 1983, pages 726-732, Berlin, DE; W. GRÖSCH et al.: "Ein Vollduplexmodem mit adaptiver Sprecherecholöschung zur Übertragung von 4800 bit/s über Fernsprechkanäle"
E.D.N. ELECTRICAL DESIGN NEWS, vol. 29, no. 10, 17 mai 1984, pages 187-200, Boston, US; J. LANGE: "Low-cost modem circuit meets Bell Standard 212A"
WESCON CONFERENCE RECORD, vol. 24, 16-18 septembre 1980, pages 16/4 (1-7), Anaheim, CA, US; G.P.

(73) Titulaire : **TELECOMMUNICATIONS RADIOELECTRI- QUES ET TELEPHONIQUES T.R.T.**
**88, rue Brillat Savarin**
**F-75013 Paris (FR)**

(72) Inventeur : **Mary, Luc**
**SOCIETE CIVILE S.P.I.D. 209 rue de l'Université**
**F-75007 Paris (FR)**
Inventeur : **Delange, Christophe René John**
**SOCIETE CIVILE S.P.I.D. 209 rue de l'Université**
**F-75007 Paris (FR)**

(74) Mandataire : **Chaffraix, Jean et al**
**Société Civile S.P.I.D. 209, rue de l'Université**
**F-75007 Paris (FR)**

EDWARDS et al.: "Specialized signal processing chips simplify telecommunications equipment design"
ELECTRONIQUE INDUSTRIELLE, no. 27, 01 février 1982, pages 31-34, Paris, FR; M. BRULEY: "Comment réaliser un modem avec un microcontrôleur 4 bits"

**Description**

La présente invention concerne un circuit d'interface analogique monolithique entre un processeur de signal et un réseau de télécommunication, le processeur de signal comportant des accès pour une ligne BUS et opérant au moyen de signaux numériques, tandis que le réseau de télécommunication transmet des signaux de type analogique, ledit circuit d'interface comportant des organes de conversion et de filtrage ainsi que des organes réalisant des fonctions électroniques comme le contrôle automatique de gain, l'atténuation des signaux, la détection des signaux, la génération des fréquences d'horloge.

Un tel circuit est connu et décrit dans la publication "IEEE Journal of Solid-State circuits", Vol. SC-17, n° 6, Decembre 1982, intitulée : "A single-chip NMOS Analog Front-End LSI for Modems" et dont les auteurs sont YOSHIAKI KURAISHI, TAKAYOSHI MAKABE et KENJI NAKAYAMA. Cependant ce circuit tel qu'il est conçu présente des inconvénients. En effet, d'une part il ne possède pas d'accès BUS, il n'est donc pas directement compatible avec un microprocesseur et d'autre part les horloges étant figées, il ne lui est pas possible de s'adapter aux différents types de modems existants qui lui sont connectés via le réseau de télécommunication. De plus la limitation de ses fonctions programmables contraint l'éventuel utilisateur à ajouter des circuits supplémentaires afin de le rendre plus efficace et universel d'emploi. Enfin il ne permet pas de réaliser de modems avec annulation d'écho ou avec voie de retour de façon simple.

La présente invention propose un circuit du genre précité qui ne présente pas les inconvénients de ce circuit connu.

Pour cela le circuit d'interface analogique du type mentionné dans le préambule est remarquable en ce que d'une part il est muni de registres d'émission et d'écho adressés, connectés à la ligne BUS et constitués de registres d'écriture chacun associé à un registre tampon, les registres tampons suivant les registres d'écriture et autorisant l'écriture des informations dans lesdits registres d'écriture sans contrainte de phase, les informations étant ensuite reconstituées et converties après multiplexage, en ce que d'autre part il est muni de registres de réception et de signal résiduel adressés, connectés à la ligne BUS et constitués d'un registre d'écriture contenant l'information relative à la détection des signaux et de registres d'écriture associés à des registres tampons, les registres tampons précédant les registres d'écriture et autorisant deux conversions subséquentes gérées par une logique asynchrone de commande, et en ce que de plus, il est muni de registres de commande connectés à la ligne BUS adressés et décodés pour contenir des mots de commande agissant sur les divers organes pour les programmer en autorisant, entre autres, la sélection des horloges, le choix de la configuration des organes de filtrage, l'atténuation des signaux, et le contrôle automatique de gain.

Ainsi, grâce à l'invention le circuit d'interface analogique peut être directement connecté à tout microprocesseur ou processeur de signal connu comportant des accès pour une ligne BUS. En effet dans un mode de réalisation préféré de l'invention l'interface BUS est sur 8 bits, le circuit d'interface analogique qui sera appelé dès à présent dans un but de simplification CIA, reçoit du processeur de signal, via une logique de décodage, des signaux d'écriture/lecture de sélection de boîtier, de sélection de registres et de validation. Les différents registres d'émission et de réception et de commandes sont ainsi adressés et le dialogue entre processeur de signal et réseau de télécommunication est alors possible via le CIA. La programmation des différentes fonctions électroniques réalisée par l'intermédiaire des mots de commande transmis par le processeur de signal et contenus alors dans les registres de commandes permet de réaliser une configuration dynamique pour différents modes de transmission. Plus particulièrement la programmation dynamique de filtres à capacités commutées permet avantageusement l'adaptation à tout type de modem distant existant. En effet, pour un filtre à capacités commutées, la fréquence de coupure est directement proportionnelle à la fréquence de fonctionnement du filtre, programmée par le processeur de signal ce qui, quant à notre utilisation, autorise l'adaptation et la transposition d'un type de modem à un autre.

Le CIA comporte entre autres des organes réalisant la génération de fréquences d'horloge, les horloges propres à l'émission étant distinctes des horloges propres à la réception, des organes de filtrage relatifs soit à l'émission soit à la réception, et est remarquable en ce que les fréquences de fonctionnement desdits organes de filtrage relatifs soit à l'émission soit à la réception sont toutes issues des horloges propres à l'émission. Ces fréquences de fonctionnement sont donc multiples et synchrones entre elles et de par leur synchronisme et leurs rapports entiers, l'utilisation de filtres de lissage supplémentaires est rendue inutile.

Le CIA comporte d'autre part, de manière intégrée, des organes permettant de réaliser de façon simple les fonctions d'annulation d'écho et de réjection de voie de retour. Ainsi, le CIA en coopération avec le processeur de signal et un microprocesseur d'exploitation auxquels il est associé, permet la réalisation de modems dits avec annulation d'écho ou avec voie de retour, et ceci en respectant scrupuleusement les normes imposées par le CCITT.

Le CIA comporte aussi un organe de filtrage programmable passe-bande à capacités commutées et est remarquable en ce que la programmation de cet organe de filtrage est réalisable par action sur les fréquences de fonctionnement et sur les capacités. La programmation par action sur les capacités permet de déplacer la fréquence de coupure du filtre et de la régler à une valeur autre qu'un sous-multiple de la fréquence de fonctionnement, autorisant ainsi l'adaptation à un modem particulier.

La description suivante en regard des dessins annexés, donnés à titre d'exemple, fera bien comprendre comment l'invention peut être réalisée.

La figure 1 montre l'environnement du circuit d'interface, le circuit d'interface analogique (CIA), et la répartition de ses broches de connexion.

La figure 2 propose un schéma synoptique simplifié du CIA.

La figure 3 propose un schéma synoptique détaillé de l'interface logique du CIA.

La figure 4 propose un schéma synoptique détaillé du CIA sans interface logique.

La figure 5 montre l'accès ligne au CIA.

La figure 6 montre le schéma de la bouche numérique émission et des diviseurs associés.

La figure 7 montre le schéma de la bouche numérique réception et des diviseurs associés.

La figure 8 propose un exemple de répartition des registres de commandes.

La figure 9 propose un exemple de programmation des horloges.

La figure 10 propose un exemple de programmation de l'atténuateur de sortie.

La figure 11 montre un exemple de programmation du contrôle automatique de gain.

La figure 12 montre un exemple de programmation du saut de phase.

La figure 13 montre des chronogrammes d'écriture et de lectrue du CIA.

La figure 14 montre des signaux synchrones des horloges d'échantillonnage émission et réception ainsi que le fonctionnement de la logique asynchrone de commande.

La figure 15 montre un diagramme d'état de la logique asynchrone de commande.

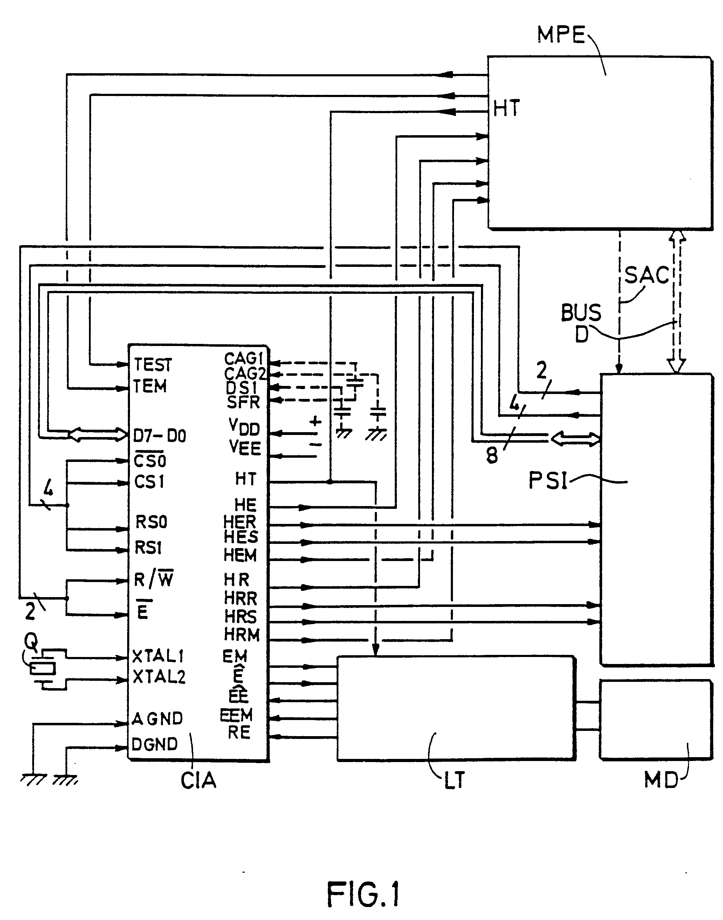

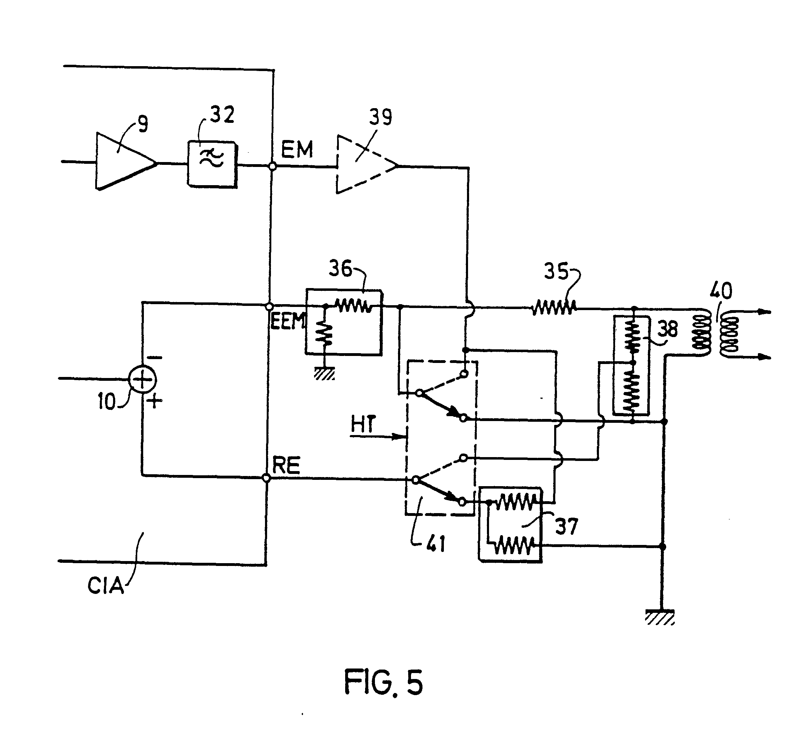

Sur la figure 1 est représenté l'environnement du circuit d'interface référencé CIA, le CIA est connecté d'une part à la ligne téléphonique LT à laquelle il est adapté, elle-même reliée au modem distant MD, et d'autre part au processeur de signal PSI. Le circuit d'interface CIA et le processeur de signal PSI sont en relation avec un microprocesseur d'exploitation MPE, l'ensemble constituant un modem. Le microprocesseur MPE, qui est un microprocesseur standard, gère ledit modem, au moyen d'un bus de données BUSD et de signaux d'adressage et de contrôle SAC en relation avec le processeur de signal PSI. La connexion et l'adaptation du CIA à la ligne téléphonique LT seront explicitées lors de la description de la figure 5.

Sur la figure 1 est aussi représenté le brochage du CIA, les différents signaux entrants et sortants du circuit y sont de même représentés. Les différentes fonctions respectives, relatives à ces signaux sont les suivantes :

TEST : programmation du mode de test, lorsque TEST = 0, les registres de commandes sont accessibles en lecture.

TEM : Entrée d'un signal de test du filtre émission et de l'atténuateur internes au CIA (facilite le test du composant).

D7-D0 : accès bidirectionnel BUS compatible avec les accès BUS du processeur de signal, et éventuellement d'autres circuits périphériques.

$\overline{CS0}$,CS1 : adressage du CIA sans boîtier extérieur. Le CIA est adressé lorsque $\overline{CS0}$ = 0 et CS1 = 1.

RS0,RS1 : adressage des registres internes.

R/$\overline{W}$ : sélection des registres en lecture ou écriture.

$\overline{E}$ : signal de validation.

XTAL 1⌉ : accès au quartz Q ou éventuellement entrée d'une fréquence provenant d'un circuit
XTAL 2⌋         extérieur.

A GND : masse analogique.

D GND : masse numérique.

CAG 1⌉ : bornes pour branchement d'un condensateur externe reliant l'entrée de l'organe de
SFR   ⌋         contrôle automatique de gain à la sortie de l'organe de filtrage le précédant.

CAG 2 : borne de sortie de l'organe de contrôle automatique de gain pour condensateur externe relié à la masse.

DS 1 : borne de l'organe de détection des signaux pour condensateur externe relié à la masse.

VDD : alimentation + 5V.

VEE : alimentation — 5V.

HT : horloge terminal fournie par le microprocesseur MPE, au CIA.

HE : horloge de débit binaire d'émission exprimée en bits/s générée par le CIA, aussi connectée au microprocesseur MPE.

HER : horloge de rythme d'émission exprimée en bauds générée par le CIA, aussi connectée au processeur de signal PSI.

HES : horloge d'échantillonnage d'émission exprimée en Hz générée par le CIA, aussi connectée au processeur de signal PSI.

HEM : horloge de multiplexage d'émission exprimée en Hz générée par le CIA, aussi connectée au microprocesseur MPE.

HR : horloge de débit binaire de réception (bits/s) générée par le CIA, aussi connectée au microprocesseur MPE.

4

HRR : horloge de rythme de réception (bauds) générée par le CIA, aussi connectée au processeur de signal PSI.

HRS : horloge d'échantillonnage de réception (Hz) générée par le CIA, aussi connectée au processeur de signal PSI.

HRM : horloge de multiplexage de réception (Hz) générée par le CIA, aussi connectée au microprocesseur MPE.

EM : sortie du signal d'émission reliée à l'adaptation de la ligne téléphonique LT.

Ê : sortie de l'écho estimé reliée à l'entrée de l'écho estimé via un pont diviseur.

ÊE : entrée de l'écho estimé.

EEM : entrée du signal d'émission reliée à l'adaptation de la ligne téléphonique LT.

RE : entrée du signal composite reliée à l'adaptation de la ligne téléphonique LT.

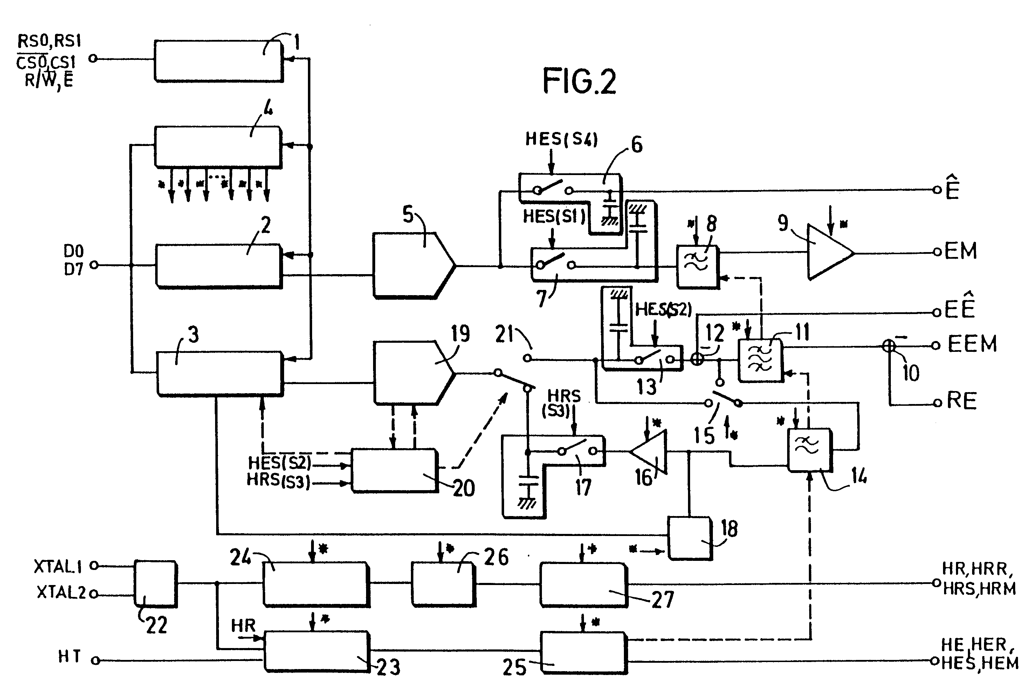

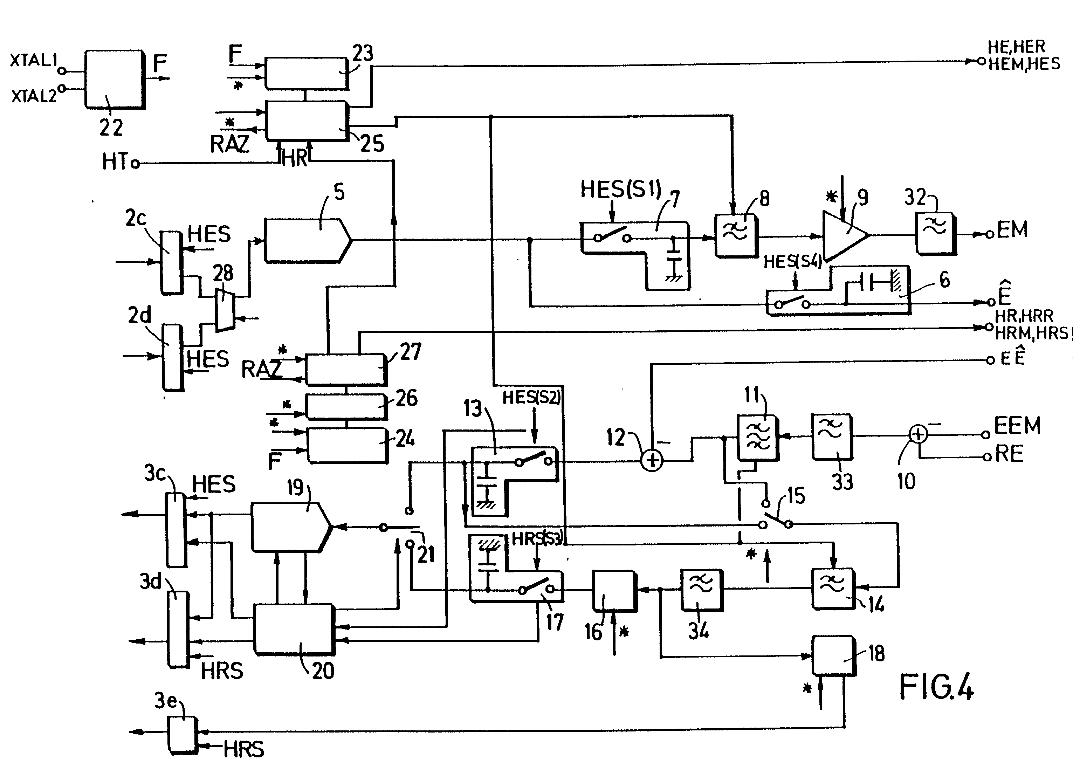

Le schéma synoptique simplifié du CIA se trouve à la figure 2, on y distingue différents blocs ayant chacun une fonction propre. La logique de décodage 1 reçoit des signaux provenant du processeur de signal tels que $\overline{CS0}$ et CS1 qui adressent le CIA, celui-ci étant adressé quand $\overline{CS0} = 0$ et CS1 = 1, RS0 et RS1 qui adressent les registres internes du CIA, $R/\overline{W}$ qui sélectionne les registres en écriture ou en lecture, écriture si $R/\overline{W} = 0$ et lecture si $R/\overline{W} = 1$ et enfin $\overline{E}$ qui est le signal de validation de l'opération d'échanges d'informations. La logique de décodage 1 permet d'aiguiller les informations présentes sur le BUS 8 bits D0-D7 dans les registres d'émission et d'écho 2, ou les informations présentes dans les registres réception et signal résiduel 3 vers la ligne BUS D0-D7, elle permet aussi en contrôlant et en validant les registres de commandes 4 de confirmer un type de modem, les registres de commandes 4 contenant les mots de commandes pour programmer les différentes fonctions électroniques du CIA. Sur les figures 2 et 4 les différentes commandes sont représentées par des flèches associées à des astérisques. Les échantillons utilisés ont pour longueur 12 bits, aussi la logique du décodage 1 aiguillera-t-elle d'abord les 4 bits de poids faibles sur D7-D4 puis les 8 bits de poids forts sur D0-D7 vers les registres d'émission et d'écho, une fois le mot de 12 bits reconstitué, il est alors aiguillé vers un convertisseur numérique analogique (12 bits) 5 qui est multiplexé c'est-à-dire qu'il convertit alternativement les informations relatives au signal d'émission et les informations relatives au signal d'écho (signal qui est utile dans le cas où l'on utilise un modem à annulation d'écho). L'écho estimé sera calculé au moyen d'un algorithme assez complexe, le calcul étant fonction du signal émis et du signal reçu. A la sortie du convertisseur numérique analogique 5, le signal relatif à l'écho est échantillonné et bloqué par un échantillonneur bloqueur 6 et le signal relatif au signal d'émission passe par l'échantillonneur bloqueur 7. Les signaux de commande de ces échantillonneurs bloqueurs 6 et 7 sont respectivement nommés HES (S4) et HES (S1), ces signaux sont synchrones de l'horloge d'échantillonnage d'émission HES. Le signal d'émission passe alors à travers un filtre passe-bas 8 à capacités commutées elliptique du 6ème ordre commandé par une fréquence asservie à l'horloge d'échantillonnage d'émission HES, puis passe par un atténuateur programmable 9. A la sortie de l'atténuateur 9, est la sortie du signal d'émission EM.

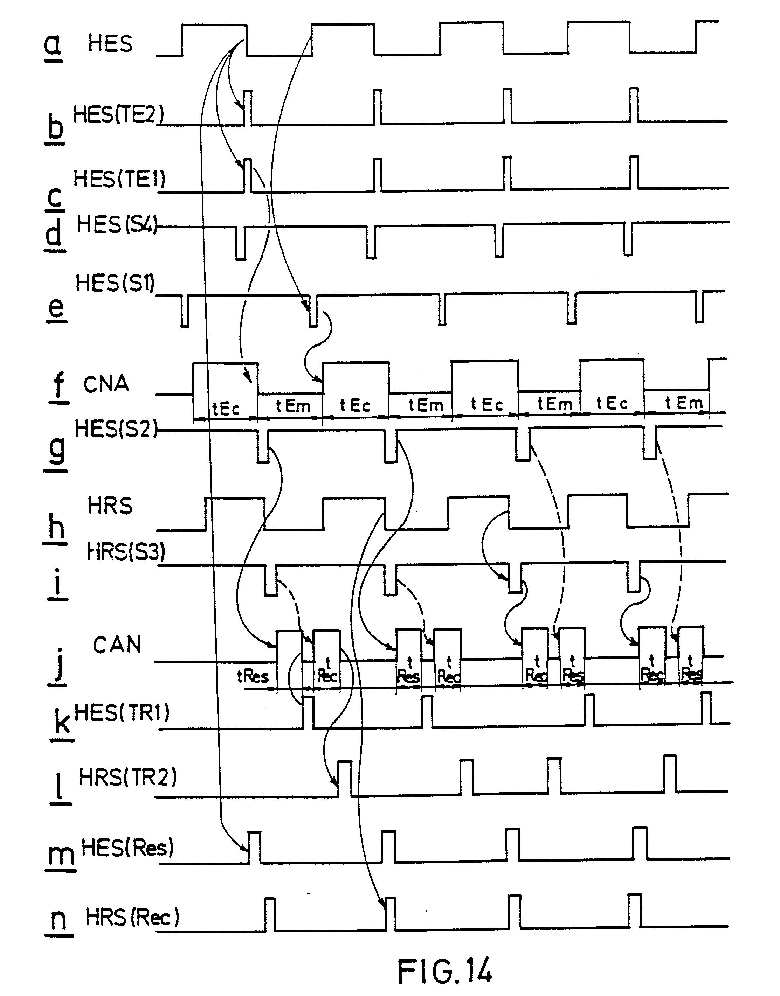

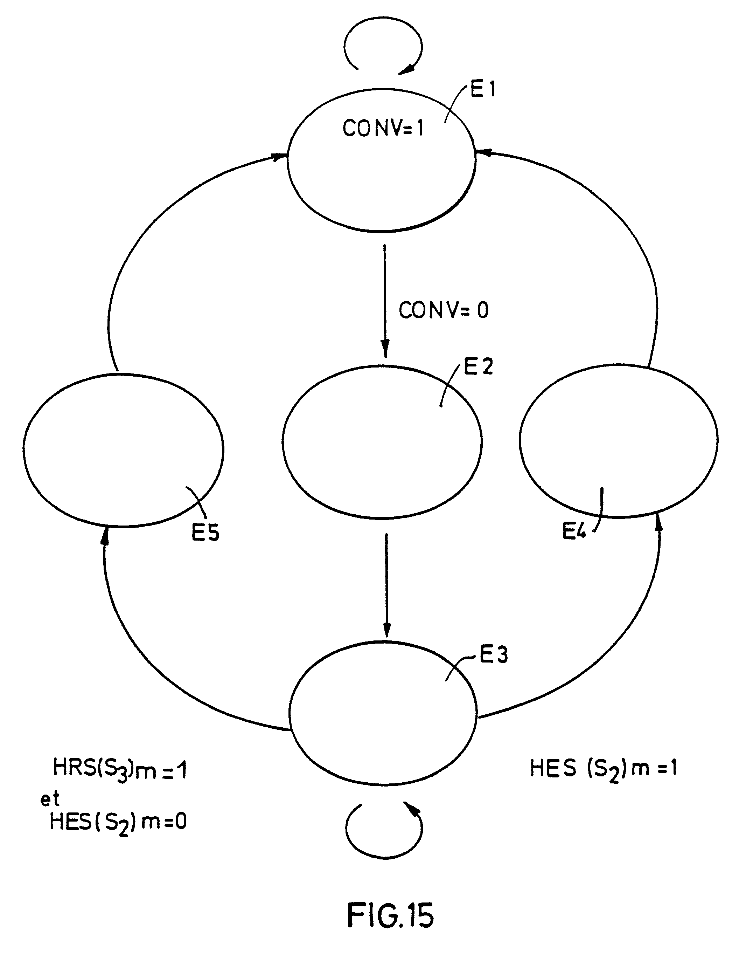

A la réception, au signal provenant du réseau de télécommunication appelé signal composite RE (car il est entaché du signal émis) est soustrait en un point de soustraction 10 le signal d'entrée d'émission EEM qui n'est autre qu'une fraction du signal émis EM réinjectée. Le signal obtenu après soustraction est envoyé dans un organe de filtrage programmable 11 passe-bande à capacités commutées, composé d'un filtre passe-bas elliptique du 5ème ordre et d'un filtre passe-haut du 2nd ordre en série. La fréquence de fonctionnement du filtre passe-haut est inférieure à la fréquence de fonctionnement du filtre passe-bas, ce qui réduit ainsi le rapport de capacités dans le filtre passe-haut à capacités commutées et par là, le volume des capacités tout en conservant une stabilité et une précision satisfaisantes. Dans un mode de réalisation préféré de l'invention cet organe de filtrage 11 est programmable par action sur les fréquences de fonctionnement et sur les capacités, ce qui offre une grande liberté quant à l'adaptation à tout type de modem. A la sortie de l'organe de filtrage 11 se trouve le point de soustraction 12 de l'écho estimé où est soustrait le signal d'entrée de l'écho estimé ÊE qui n'est autre qu'une fraction du signal de sortie de l'écho estimé Ê réinjectée. Puis le signal résiduel est appliqué à l'entrée d'un échantillonneur bloqueur 13 commandé par le signal HES (S2) qui est synchrone de l'horloge d'échantillonnage d'émission HES. En mode avec annuleur d'écho, le filtre de reconstruction passe-bas programmable 14 à capacités commutées permet d'éliminer les composantes de l'horloge d'échantillonnage d'émission HES, c'est un filtre de type elliptique du 5ème ordre. En mode avec annuleur d'écho le commutateur 15 est en position basse. En mode sans annuleur d'écho, le commutateur 15 est en position haute. La sortie du filtre passe-bas 14 est connectée à un amplificateur à gain programmable 16 contrôlant automatiquement le gain, la boucle de gain est réalisée par logiciel. Le signal à la sortie de l'amplificateur 16 est échantillonné par l'échantillonneur bloqueur 17, HRS (S3) étant le signal de commande, le signal de commande étant synchrone de l'horloge d'échantillonnage de réception HRS. Dans le cas général les horloges d'échantillonnage d'entrée HES et de sortie HRS sont plésiochrones. Le signal présent à l'entrée de l'amplificateur 16 est aussi aiguillé vers l'organe de détection des signaux 18 qui possède 2 plages de fonctionnement programmables et avec lequel il est possible de programmer un hystérésis, dans un mode de réalisation préféré de l'invention, cet organe de détection des signaux 18 est un comparateur, il suffit alors de changer le seuil dudit comparateur pour obtenir l'hystérésis. La sortie détection de signaux (signal présent ou absent selon le niveau programmé) est connectée aux registres tampons de réception 3. Le convertisseur analogique numérique 19 est un convertisseur 12 bits et est commandé par la logique asynchrone de commande 20 qui gère la succession des conversions en tenant compte du caractère plésiochrone des horloges HES et HRS. Le convertisseur 19 est alternativement branché sur les sorties des échantillonneurs bloqueurs 13 et 17 au moyen d'un interrupteur 21 commandé par le circuit 20. La logique asynchrone de commande 20 examine la phase relative des signaux HES (S2) et HRS (S3). Le fonctionnement propre à la logique asynchrone de commande sera explicité avec les figures 14 et 15. Après conversion les signaux sont dirigés vers les registres de réception et signal résiduel 3.

La référence de fréquence de l'oscillateur 22 est fournie soit par un quartz, soit par une fréquence générée par un circuit extérieur, cette référence de fréquence est appliquée à l'oscillateur 22 en ses accès XTAL 1 et XTAL 2. Le quartz est sélectionné parmi plusieurs suivant l'application envisagée et selon un mode de réalisation préféré de l'invention, il est particulièrement avantageux de disposer des 3 fréquences suivantes : 5,76 MHz, 5,40 MHz et 5,12 MHz.

La sortie de l'oscillateur 22 est connectée aux boucles à verrouillage de phase numériques d'émission 23 et de réception 24.

La boucle à verrouillage de phase d'émission 23 fonctionne suivant 3 modes :

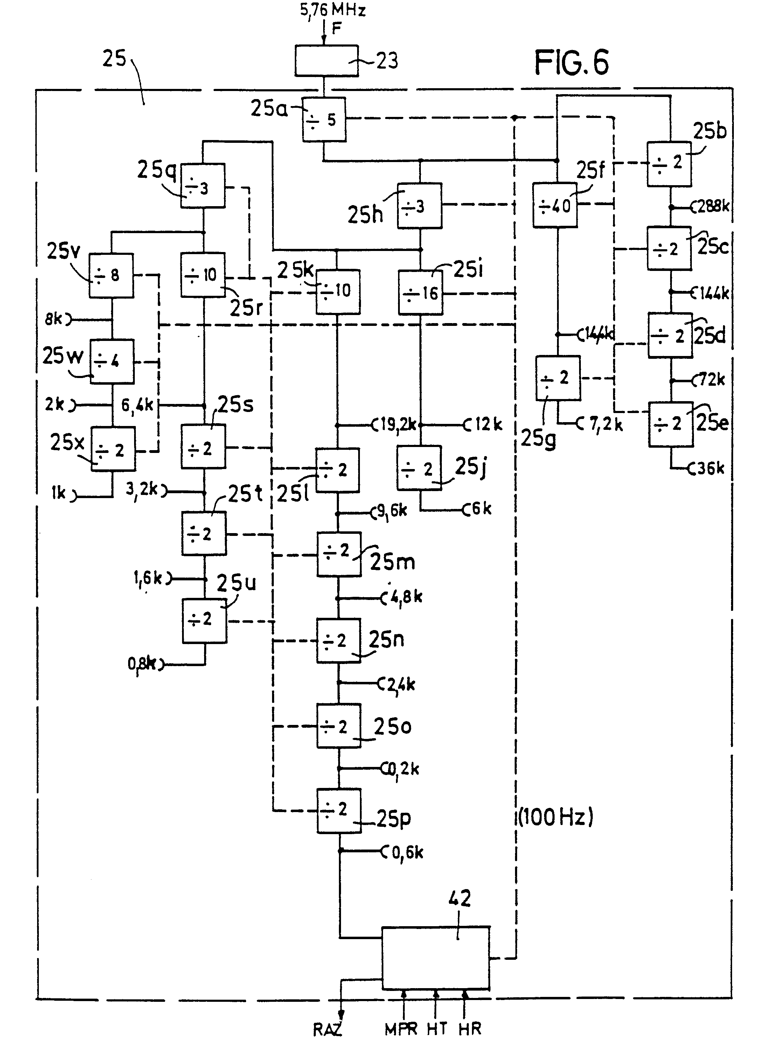

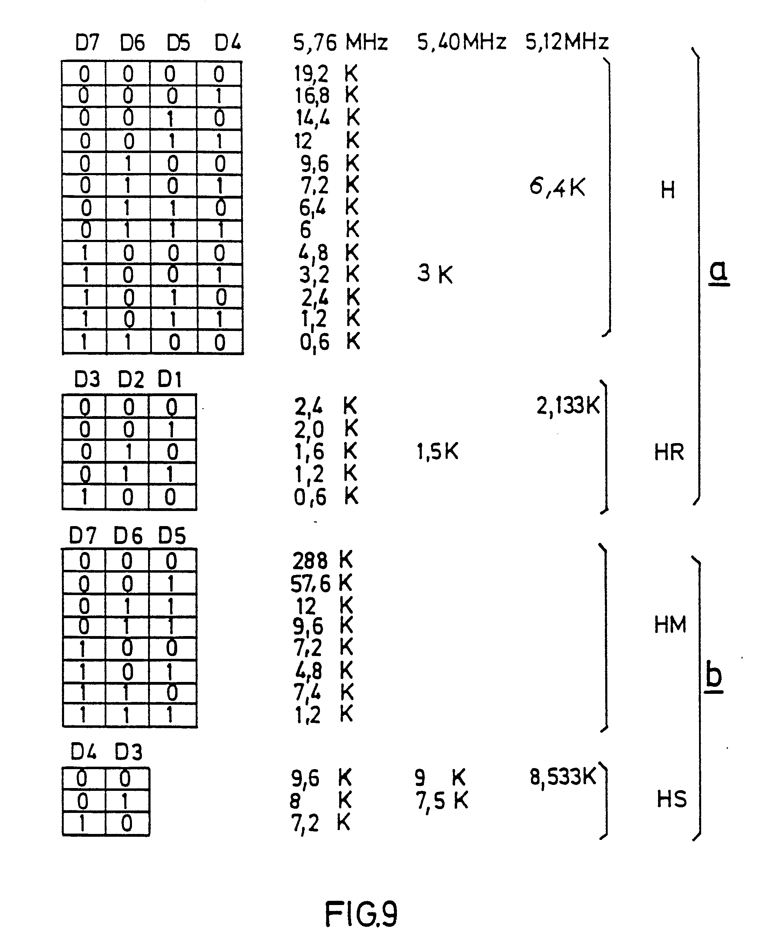

Mode 1 : boucle libre, les fréquences fournies sont celles proposées aux figures 6 et 9.
Mode 2 : boucle synchronisée sur l'horloge terminal HT extérieure au CIA.
Mode 3 : boucle synchronisée sur l'horloge de débit binaire de réception HR.

Le choix du mode est réalisé par un mot de commande contenu dans les registres de commandes 4.

En cas de disparition de l'horloge HT (ou HR) sur laquelle la boucle doit se synchroniser, celle-ci passe en fonctionnement libre et génère alors les fréquences issues des chaînes de diviseurs 25 proposées à la figure 6. On dispose d'une commande de phase rapide sur un front des horloges HT ou HR imposée à partir des registres de commandes 4. Après la prise en compte de la commande de mise en phase rapide et son exécution, une remise à zéro interne (RAZ) est effectuée sur le registre de commande concerné. Une autre commande peut alors être envoyée sans pour cela réinitialiser ce registre de commande. De la chaîne de diviseurs sont ainsi issues, la fréquence d'horloge de débit binaire d'émission HE, la fréquence d'horloge de rythme d'émission HER, la fréquence d'horloge d'échantillonnage d'émission HES et la fréquence d'horloge de multiplexage d'émission HEM.

La boucle à verrouillage de phase de réception 24 possède une architecture semblable, mais de plus il est possible de programmer des avances ou des retards de phase à partir du processeur de signal via les registres de commandes 4. La prise en compte de la commande est immédiate, comme pour la boucle à verrouillage de phase d'émission 23 la remise à zéro (RAZ) du registre de commande concerné, a lieu après exécution de la commande.

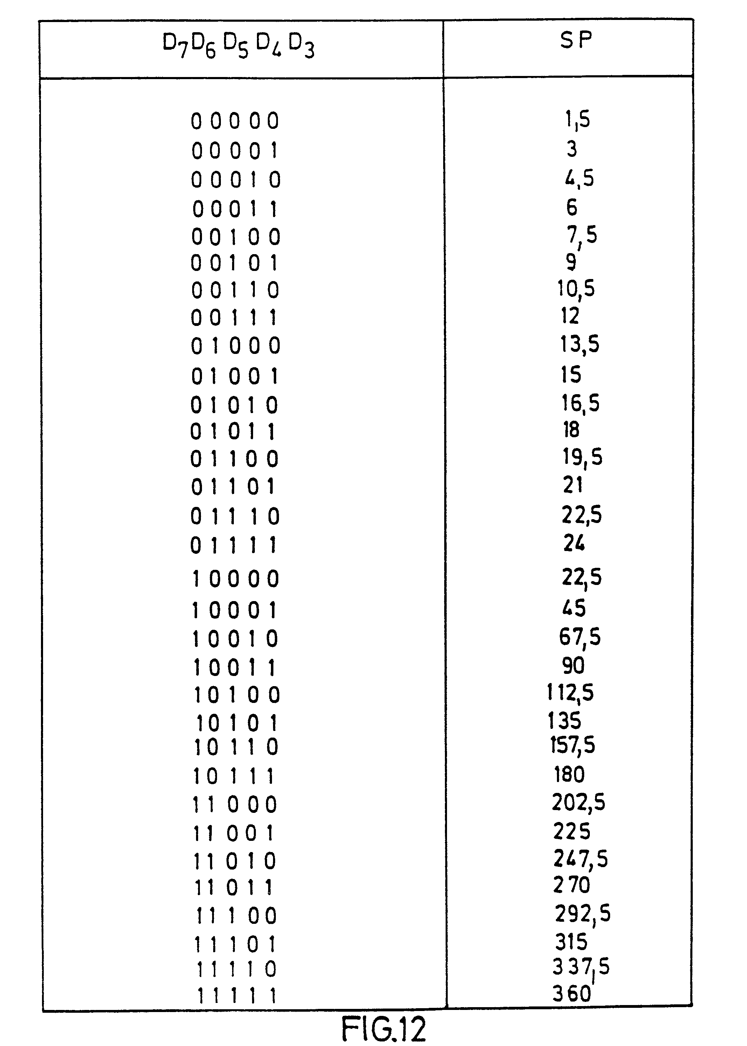

On dispose d'autre part d'un circuit de saut de phase 26 qui est utilisé pour la mise en phase rapide. Différentes valeurs de sauts de phase sont programmables au niveau des registres de commandes 4. La commande de saut de phase est exécutée après reconnaissance d'un bit dans les registres de commandes 4. La remise à zéro (RAZ) du registre de commande concerné est réalisée ensuite. Les différentes valeurs de sauts de phase seront explicitées sur la figure 12.

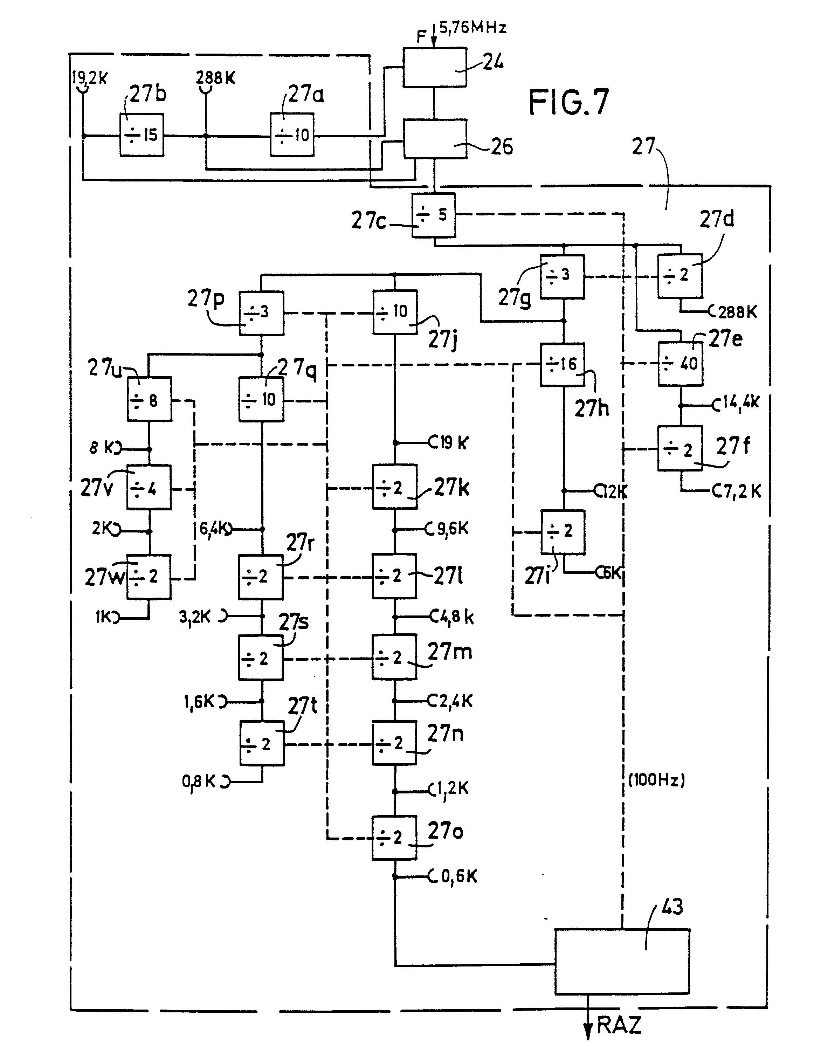

Les différentes fréquences d'horloge de réception sont alors générées à partir de la chaîne de diviseurs 27, ainsi sont issues, la fréquence d'horloge de débit binaire de réception HR, la fréquence d'horloge de rythme de réception HRR, la fréquence d'horloge d'échantillonnage de réception HRS et la fréquence d'horloge de multiplexage de réception HRM. La génération de ces différentes horloges est proposée sur la figure 7.

Les chaînes de diviseurs émission et réception sont indépendamment resynchronisées périodiquement de façon à assurer une phase correcte entre les différentes sorties. Les sorties d'horloges d'émission et de réception sont égales en valeur nominale, elles sont toutes à rapport cyclique 50 %.

Un certain nombre de bouclages internes sont prévus pour tester le bon fonctionnement de la transmission ainsi que des ponts sur les jonctions critiques de manière à localiser un éventuel mauvais fonctionnement (filtres, contrôle automatique de gain...).

En particulier deux bouclages sont programmables dans le CIA. Un bouclage numérique du signal de réception sur le signal d'émission lorsque la boucle émission 23 est synchronisée sur l'horloge réception HR au moment où le CIA est lu par le processeur de signal PSI. Ce bouclage est fait par action sur un bit BN d'un registre de commande. Un bouclage analogique dit test de boucle 3 teste la fonction d'annulation d'écho. En mode avec annulation d'écho, une fraction du signal émis kEM (signal émis atténué de l'ordre de 20 dB) est injectée à l'entrée du filtre de reconstruction 14 par action sur un bit BA d'un registre de commande. Si la fonction annulation d'écho est incorrectement effectuée, l'écho résiduel n'est plus négligeable devant la fraction de tension kEM, et cet écho va rendre la tension kEM inintelligible pour le récepteur. Le fonctionnement de ce test est possible grâce au retard apporté par le temps de propagation dans le filtre passe-bande 11 du signal d'écho résiduel.

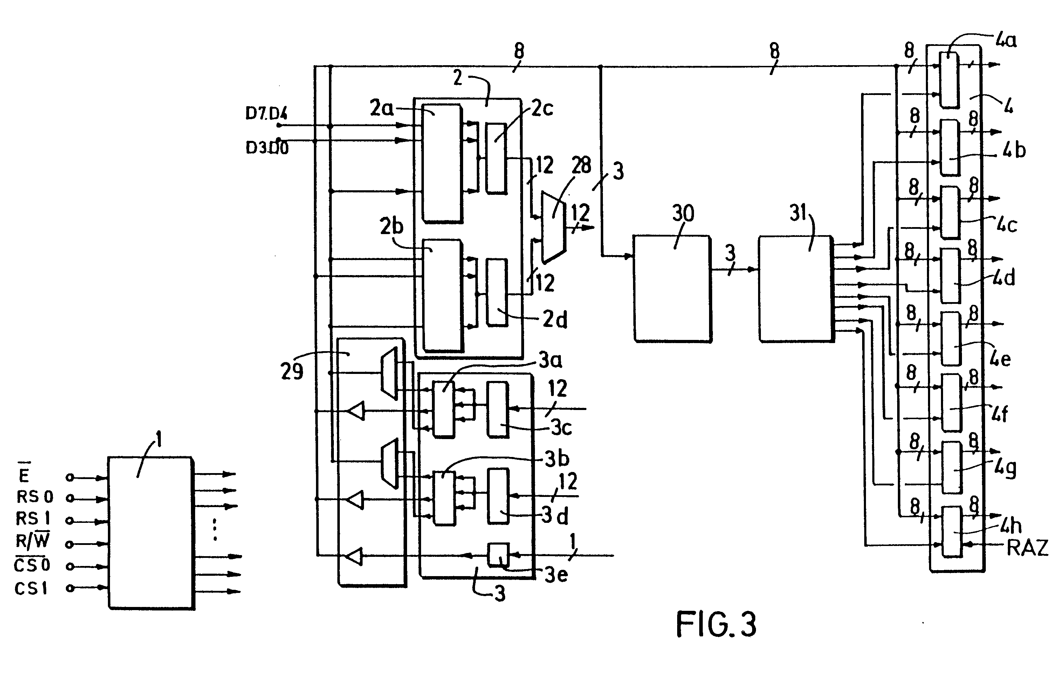

Sur la figure 3 est représenté le schéma synoptique détaillé de l'interface logique du CIA comportant, la logique de décodage 1 déjà détaillée lors de l'explicitation de la figure 2, et le détail des différents registres d'émission et de réception ainsi que les registres de commandes.

L'adressage du CIA se fait par l'intermédiaire des broches $\overline{CS0}$ et CS1. Le CIA est adressé lorsque $\overline{CS0}$ = 0 et CS1 = 1.

L'interface avec la ligne BUS se fait sur 8 bits, or les mots utilisés ou échantillons ont pour longueur 12 bits. Les échantillons sont donc écrits et lus en deux cycles d'horloge. Deux bascules sont utilisées pour différencier les deux cycles. Elles sont périodiquement réinitialisées. L'ordre de transfert choisi est le suivant :

1er cycle : 4 poids faibles sur D7-D4 (en mode " lecture ", 4 états bas sont présentés sur D3-D0 par le CIA).

2ème cycle : 8 poids forts sur D7-D0.

Une exploration plus détaillée des registres d'émission et d'écho 2 fait apparaître l'association de registres d'écriture (2a, 2b) à des registres tampons (2c, 2d). Les registres tampons 2c, 2d permettent respectivement l'écriture de l'échantillon à émettre et de l'écho estimé dans les registres d'émission 2a et d'écho 2b, sans contrainte de phase particulière. Les mots de 12 bits sont alors reconstitués et convertis dans le convertisseur numérique analogique 5 (figure 2) multiplexé par le circuit de multiplexage 28. En fait les informations relatives à l'échantillon à émettre ainsi que celles relatives à l'écho estimé sont alternativement converties par le convertisseur 5.

De même pour les registres de réception et de signal résiduel 3, des registres d'écriture 3a, 3b sont associés à des registres tampons 3c, 3d. Ces registres tampons 3c, 3d sont nécessaires lorsque l'on est amené à faire deux conversions de suite sur le signal d'écho résiduel ou sur le signal reçu au rythme du battement entre l'horloge d'échantillonnage d'émission HES et l'horloge d'échantillonnage de réception HRS. L'association du registre tampon 3c et du registre d'écriture 3a, étant relative au signal d'écho résiduel et l'association du registre tampon 3d et du registre d'écriture 3b étant relative au signal reçu. Le transfert dans les registres d'écriture se fait alors sur front descendant des horloges d'échantillonnage d'émission et de réception HES et HRS respectivement. Les registres de réception et signal résiduel 3 comportent également un registre 3e relatif à la détection des signaux réalisée par le circuit de détection des signaux 18 (figure 2), ce registre 3e permet de transmettre l'information précisant si un signal a été détecté ou non, un bit étant nécessaire pour communiquer ce renseignement. La détection de signal est du type détection de signal rapide, l'intégration de l'information est faite par le processeur de signal. La lecture des registres de réception et signal résiduel 3 se fait aussi en deux cycles (1er cycle : 4 poids faibles sur D7-D4, 2ème cycle : 8 poids forts sur D7-D0). Aux sorties des registres de réception et signal résiduel 3 se trouve un ensemble de circuits trois-états 29 autorisant ou interdisant la transmission des informations sur le BUS 8 bits vers le processeur de signal PSI.

Les entrées de commande se font elles, suivant le cas, en un ou deux cycles, le compteur d'adresse 30 étant incrémenté après chaque écriture d'un registre de commande. Dans un mode de réalisation préféré de l'invention le nombre de registres de commandes est de huit chacun de taille 8 bits. Ces 8 registres de commandes sont référencés de 4a à 4h. La procédure d'écriture est la suivante :

1er cycle : adressage du compteur d'adresse 30 et chargement de l'adresse du registre de commande concerné (3 bits).

2ème cycle : le décodeur d'adresse 31 décode l'adresse du registre concerné permettant ainsi l'écriture des données dans le registre sélectionné.

Le compteur d'adresse 30 est incrémenté après écriture dans un registre de commande, on peut donc écrire le registre suivant sans avoir à rentrer son adresse.

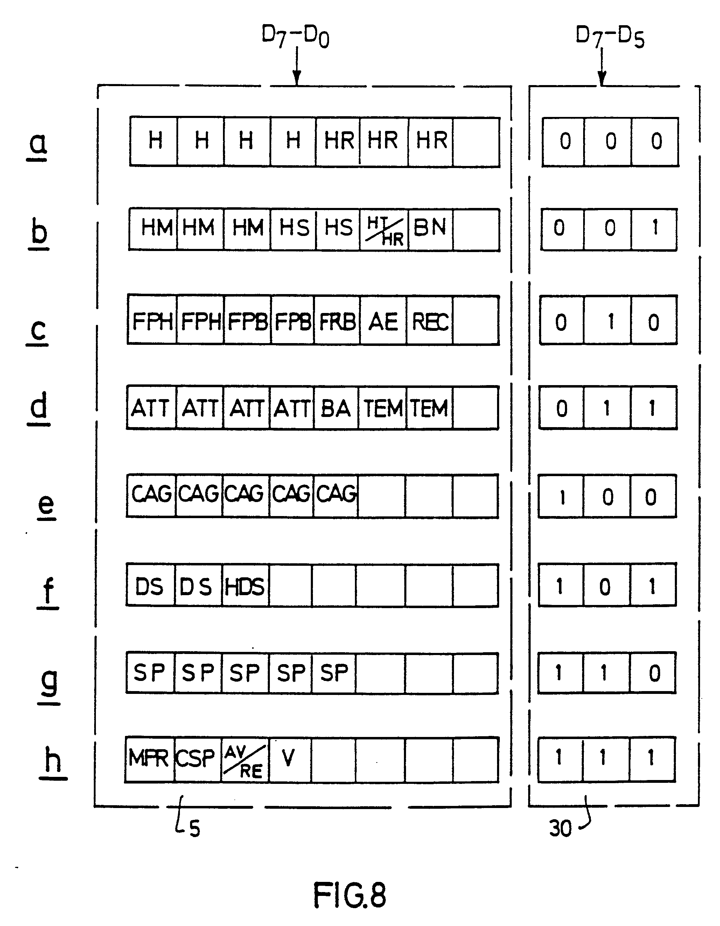

Les registres de commandes sont utilisés pour la sélection des horloges (H : horloge de débit binaire, HR horloge de rythme, HM : horloge de multiplexage, HS : horloge d'échantillonnage), pour la configuration des filtres et bouclages internes, pour l'atténuateur de sortie, pour le contrôle automatique de gain, le niveau du détecteur de signal, le saut de phase, les commandes des synchrobits (mise en phase rapide, saut de phase, avance ou retard). Les commandes des synchrobits sont groupées dans le 8ème registre qui dispose d'une commande de remise à zéro (RAZ). L'entrée des commandes se fait à des instants quelconques. La répartition des registres de commandes sera explicitée avec la figure 8.

L'adressage des différents registres d'émission, de réception et de commandes se fait de la façon suivante :

| R/W̄ | RSO | RS1 | ACCES |
|------|-----|-----|-------|
| 0 | 0 | 0 | Ecriture registre échantillon à émettre |
| 0 | 0 | 1 | Ecriture registre échantillon écho estimé |
| 0 | 1 | 1 | Ecriture registres de commandes (8 registres) |
| 0 | 1 | 0 | Ecriture adresse du registre de commande |
| 1 | 0 | 0 | Lecture registre échantillon reçu |
| 1 | 0 | 1 | Lecture registre échantillon signal résiduel |
| 1 | 1 | 1 | lecture registre de détection des signaux |

L'interface logique du CIA est définie avec un souci de compatibilité totale avec le processeur de signal utilisé, cependant elle se prête parfaitement avec son bus 8 bits et ses signaux d'entrée ($\overline{E}$, R/$\overline{W}$, CS0, CS1, RS0, RS1) à des échanges avec un microprocesseur d'usage général et éventuellement avec un autre processeur de signal.

La figure 4 montre le schéma synoptique détaillé du CIA sans l'interface logique commentée avec la figure 3. Les éléments communs aux figures 2 et 3 sont identiquement référencés, leurs fonctions ayant été précédemment décrites, seuls les éléments nouveaux apparaissant sur la figure 4 et leur proche environnement font l'objet de descriptions et de précisions quant à leurs fonctions.

A l'émission, l'échantillonneur bloqueur 7 maintient l'échantillon du signal à émettre pendant la conversion de l'écho estimé. Il élimine d'éventuelles pointes de commutation générées pendant la conversion et assure un pré-filtrage du signal échantillonné. Le filtre passe-bas 8 à capacités commutées assure un filtrage suffisant pour que le spectre en ligne respecte le gabarit normalisé. La fréquence utilisée est issue de la chaîne émission, elle est multiple et synchrone de la fréquence d'échantillonnage émission HES, ce qui évite l'emploi d'une cellule active de lissage, qui en surface de silicium est fort coûteuse, (liaison directe). Il est suivi par l'atténuateur programmable 9 dont l'atténuation est réglable à l'aide de 4 bits de contrôle de façon à avoir un niveau compris entre 0 et — 20 dB en ligne. Le réglage de niveau en ligne est fait en combinant la plage de fonctionnement du convertisseur numérique analogique 5 et l'atténuateur 9. A la sortie de l'atténuateur un filtre analogique 32 de type RC élimine les composantes d'horloge du filtre passe-bas 8 à capacités commutées.

A la réception le point de soustraction 10 permet de raccorder le CIA à une ligne deux fils couplant ainsi le CIA à la ligne de télécommunication. Le point de soustraction 10 est suivi d'un filtre passe-bas analogique 33 de type RC qui limite la bande passante en fonction de la fréquence de fonctionnement du filtre passe-bande 11 à capacités commutées, le filtre passe-bas 33 jouant le rôle de cellule antirepliement du second ordre. Le filtre passe-bande 11 est dynamiquement configuré par le processeur de signal et assure ainsi un préfiltrage optimal du signal reçu, le complément de filtrage étant réalisé numériquement dans le processeur de signal. L'adaptation du filtre passe-bande 11 est faite par changement de la fréquence de commande de chacun des deux filtres (passe-bas, suivi d'un passe-haut) le composant.

On peut noter que, conformément à l'invention, bien que relatif à la réception, le filtre passe-bande 11 à capacités commutées est commandé par une fréquence issue de la chaîne de diviseurs émission. L'échantillonnage du signal d'écho résiduel que l'on appellera plus simplement dès à présent signal résiduel, se fait aussi à la fréquence émission et donc sans problème de phase. Il ne nécessite pas ainsi de filtre de lissage supplémentaire. Le filtre passe-bande est selon un autre mode de réalisation préféré de l'invention constitué de l'association de trois filtres, un filtre passe-bas, un filtre passe-haut et un filtre réjecteur de voie de retour. Le filtre réjecteur de voie de retour composé de deux cellules biquads, peut être mise en série avec les deux filtres précédents. Conformément à l'invention, ce filtre réjecteur est programmable par action sur les fréquences de fonctionnement et sur les capacités, ce qui permet l'adaptation à un modem donné selon la fréquence sur laquelle il est centré. Sa fréquence de commande par exemple peut être égale à la fréquence de fonctionnement du filtre passe-haut dans le cas d'une réalisation d'un modem avec voie de retour, dans le cas où cette réalisation ne s'avère pas nécessaire, ce filtre réjecteur de voie de retour peut être mis hors circuit. Le filtre passe-bande 11 est suivi d'un point de soustraction 12, qui permet de soustraire l'entrée de l'écho estimé $\widehat{EE}$ au signal composite sortant du filtre passe-bande 11. Le signal résiduel est échantillonné par l'échantillonneur bloqueur 13 à la fréquence d'échantillonnage d'émission HES. En mode avec annuleur d'écho le filtre passe-bas 14 à capacités commutées permet d'éliminer les composantes d'échantillonnage à la fréquence émission HES, dans ce mode le commutateur 15 est en position basse. Le passe-bas analogique 34 de type RC élimine la fréquence de commande du filtre passe-bas 14 et les produits de modulation liés à cette fréquence et à ses harmoniques et permet de s'affranchir du problème de phase puisque conformément à l'invention, le filtre 14 est commandé par une fréquence issue de la chaîne émission et c'est seulement après le contrôle automatique de gain par l'amplificateur 16 que l'échantillonnage se fait au rythme réception. En mode sans annuleur d'écho le commutateur 15 est alors en position haute.

La figure 5 montre l'accès de la ligne téléphonique au CIA qui est réalisé à l'aide de la résistance 35 et de quelques ponts de résistances 36, 37 et 38. Ces quelques ponts de résistances et cette résistance suffisent lorsque l'excursion de la tension de sortie limitée à ± 2,5 V est suffisante. La résistance 35 est une résistance d'adaptation à la ligne téléphonique, le pont de résistances 36 fournissant une résistance complémentaire dépendant de la ligne téléphonique. Le pont de résistances 37 constitue le pont de boucle nécessaire à la réalisation du bouclage analogique du test dit de boucle 3. Enfin par le pont de résistances 38, la fraction utile du signal de réception est ramenée à l'entrée du signal composite RE.

Un amplificateur 39 extérieur au CIA peut être utilisé dans le cas d'un modem ayant un facteur de crête important. L'amplificateur 39 ainsi ramène le niveau de sortie en ligne à une valeur acceptable, de plus le transformateur de ligne 40 n'est plus directement branché sur la sortie émission EM du CIA. Le relais 41 est représenté au repos sur la figure 5. Le relais 41 autorise, entre autres, le passage du signal composite RE vers la borne positive du soustracteur 10 et du signal d'entrée d'émission EEM vers la borne négative du soustracteur 10. Le signal d'entrée d'émission EEM est tout simplement une fraction du signal de sortie d'émission EM réinjectée. Le relais 41 est commandé par le microprocesseur d'exploitation MPE (signal de Commande RT), qui est associé au processeur de signal et au CIA pour

EP 0 175 410 B1

composer le modem. La description de la figure 5 est faite avec une ligne 2 fils, mais le CIA peut tout aussi bien s'adapter à une ligne 4 fils.

La figure 6 montre un exemple non limitatif de génération des différentes horloges d'émission et leurs diviseurs associés alors que la figure 7 montre un exemple non limitatif de génération des différentes horloges de réception et leurs diviseurs associés. Les horloges d'émission et de réception étant principalement les horloges de débit binaire HE et HR, les horloges de rythme HRE et HRR, les horloges d'échantillonnage HES et HRS et les horloges de multiplexage HEM et HRM. La génération des horloges d'émission et de réception proposée aux figures 6 et 7 est effectuée au moyen d'un quartz de valeur 5,76 MHz, cette valeur n'est cependant pas limitative, les fréquences alors générées restant proportionnelles relativement à la sélection de la nouvelle valeur de fréquence d'oscillation du nouveau quartz, et aux divisions opérées. Les circuits référencés 42 sur la figure 6 et 43 sur la figure 7 sont les circuits de remise à zéro interne (RAZ) des chaînes de diviseurs de fréquence. La coïncidence des fronts descendants de toutes les sorties est assurée par ce circuit de remise à zéro 42 (ou 43), qui à la fréquence de 100 Hz sous-multiple de toutes les fréquences, effectue la remise à zéro de toutes les bascules et du registre de commande concerné (signal RAZ). Le circuit de remise à zéro 42 reçoit d'autre part l'horloge terminal HT venant du microprocesseur MPE, l'horloge de débit binaire de réception HR, ainsi que la cmmande de mise en phase rapide référencée MPR.

Dans l'exemple de la figure 6, la fréquence F du signal entrant dans la boucle à verrouillage de phase 23 est de 5,76 MHz, en sortie de la boucle 23 la fréquence est donc moitié, soit 2,88 MHz. C'est de cette fréquence qui va être divisée dans la chaîne de diviseurs émission 25, que vont être issues les différentes horloges d'émission. La fréquence du signal est d'abord divisée par 5 par le diviseur 25a, puis par 2 par le diviseur 25b en série avec 25a, à la sortie de 25b est disponible une fréquence de 288 kHz, à la sortie du diviseur par 2 25c en série avec 25b est la fréquence de 144 kHz, à la sortie du diviseur par 2 25d en série avec 25c la fréquence est alors de 72 kHz, enfin à la sortie du diviseur par 2 25e est la fréquence 36 kHz. Les fréquences 288 kHz, 144 kHz, 72 kHz et 36 kHz sont des fréquences de fonctionnement utilisables pour les différents filtres, que ceux-ci appartiennent à l'émission ou à la réception, conformément à l'invention.

A la sortie du diviseur 25a est branché en série un ensemble de division par 40 25f (un diviseur par 5 et un diviseur par 8 en série par exemple), la fréquence est de 14,4 kHz à la sortie de 25f, puis le diviseur par 2 25g en série avec 25f permet de disposer à sa sortie d'une fréquence de 7,2 kHz.

A la sortie du diviseur 25a est aussi branché en série un diviseur par 3 25h. En série avec 25h, un ensemble de division par 16 25i (2 diviseurs par 4 en série par exemple) dispose à sa sortie d'une fréquence de 12 kHz, un diviseur par 2 25j en série avec 25i ramène cette fréquence à 6 kHz.

A la sortie de 25h est branché en série un ensemble de division par 10 25k (diviseurs par 2 et par 5 en série par exemple), la fréquence est 19,2 kHz à la sortie de 25k, en série avec 25k est branché un diviseur par 2 25l dontla fréquence de sortie est de 9,6 kHz, le diviseur suivant en série avec 25l est un diviseur par 2 25m dont la fréquence de sortie est de 4,8 kHz, suivent respectivement les diviseurs par 2 25n, 25o, 25p en série avec 25m et dont les fréquences de sortie sont respectivement 2,4 kHz, 1,2 kHz et 0,6 kHz.

A la sortie de 25h et en série est branché le diviseur par 3 25q, un ensemble de division par 10 25r (diviseurs par 2 et par 5 en série par exemple) suit en série 25q, à la sortie de 25r est la fréquence 6,4 kHz, en série avec 25r sont respectivement les diviseurs par 2 25s, 25t, 25u, dont les fréquences de sortie sont respectivement 3,2 kHz, 1,6 kHz et 0,8 kHz.

En sortie de 25q est aussi branché en série le diviseur par 8 25v dont la sortie est à 8 kHz, en série avec 25v est le diviseur par 4 25w dont la sortie est à 2 kHz, enfin en série avec 25w est branché le diviseur par 2 25x qui dispose à sa sortie d'une fréquence de 1 kHz.

Un diviseur programmable permet d'obtenir des fréquences variables qui ne sont pas des sous-multiples entiers de 2,88 MHz, le rapport cyclique n'est plus alors égal à 50 % comme pour les autres fréquences. Par exemple la fréquence de 16,8 kHz mentionnée à la figure 9 est ainsi obtenue.

Les boucles à verrouillage de phase, respectivement 23, 24, utilisent les fréquences de rebouclage 1000 Hz, 800 Hz, 600 Hz, disponibles respectivement dans les chaînes de diviseurs 25, 27. La correction se fait sous forme de 2 impulsions de fréquence 2,88 MHz, ajoutées ou retirées à la fréquence de rebouclage.

Dans l'exemple de la figure 7, la fréquence F du signal entrant dans la boucle à verrouillage de phase de réception 24 est de 5,76 MHz, en sortie de boucle la fréquence est donc moitié, soit 2,88 MHz. C'est de cette fréquence qui va être divisée dans la chaîne de diviseurs réception 27, que sont issues les différentes horloges de réception. Une sortie de la boucle 24 est connectée à un ensemble de division par 10 27a (par exemple un diviseur par 5 et un diviseur par 2 en série) à la sortie duquel est la fréquence 288 kHz, à la sortie de 27a est branché en série un ensemble de division par 15 27b (un diviseur par 3 et un diviseur par 5 en série, par exemple), à la sortie de 27b est la fréquence 19,2 kHz. Les deux fréquences, 288 kHz et 19,2 kHz sont utiles au circuit de saut de phase 26, aussi les sorties de 27a et 27b sont-elles branchées sur le circuit 26.

La sortie du circuit 26 est connectée à l'entrée d'un diviseur par 5 27c, un diviseur par 2 27d est relié à la sortie de 27c, la fréquence de sortie de 27d est de 288 kHz.

La sortie de 27c est aussi reliée à un ensemble de division par 40 27e (un diviseur par 8 et un diviseur par 5 en série, par exemple), à la sortie de 27e est la fréquence 14,4 kHz, un diviseur par 2 27f est branché en série à la sortie de 27e, à la sortie de 27g la fréquence est égale à 7,2 kHz.

9

La sortie de 27c est enfin reliée à un diviseur par 3 27g. A la sortie de 27g est relié un ensemble de division par 16 27h (deux diviseurs par 4 en série, par exemple) à la sortie duquel la fréquence est de 12 kHz, un diviseur par 2 27i est branché en série avec 27h, à sa sortie est la fréquence 6 kHz.

A la sortie de 27 g est branché en série un ensemble de division par 10 27j (un diviseur par 5, suivi d'un diviseur par 2, par exemple) à la sortie duquel la fréquence est de 19,2 kHz, en série avec 27j sont respectivement les diviseurs par 2 27k, 27l, 27m, 27n, 27o dont les fréquences de sorties sont respectivement 9,6 kHz, 4,8 kHz, 2,4 kHz, 1,2 kHz et 0,6 kHz.

A la sortie de 27 g est branché en série un diviseur par 3 27p, en série avec 27p est l'ensemble de division par 10 27q (un diviseur par 5 en série avec un diviseur par 2, par exemple) à la sortie duquel est la fréquence 6,4 kHz, en série avec 27q sont respectivement les diviseurs par 2 27r, 27s, 27t dont les fréquences de sortie sont respectivement 3,2 kHz, 1,6 kHz et 0,8 kHz.

A la sortie de 27p est aussi branché un diviseur par 8 27u dont la fréquence de sortie est 8 kHz, en série avec 27u est le diviseur par 4 27v dont la fréquence de sortie est 2 kHz, à la sortie de 27v est branché le diviseur par 2 27w, la fréquence de sortie de 27w est de 1 kHz.

Ces différentes fréquences sont données à titre d'exemple et sont des fréquences utilisables par les différentes horloges (débit binaire, rythme, multiplexage, échantillonnage, etc, voir figure 9), ces valeurs ne sont pourtant pas limitatives, car de manière triviale il est possible d'organiser les différents diviseurs pour obtenir d'autres fréquences sous-multiples de la fréquence de départ 5,76 MHz. De même les choix des quartz ne sont pas restrictifs, 5,76 MHz, 5,40 MHz et 5,12 MHz sont proposés mais toute autre valeur de fréquence d'oscillation peut être retenue selon les nécessités.

Sur la figure 8 est proposé un exemple non restrictif de répartition des registres de commandes 4. Dans un mode de réalisation préféré de l'invention les registres de commandes sont au nombre de huit et ont chacun pour taille huit bits. Ces registres de commandes et leurs adresses propres sont représentés suivant huit lignes référencées de a à h correspondant aux 8 registres de commandes référencés 4a à 4h à la figure 3. La procédure d'écriture est la suivante. Dans un premier cycle sont exécutés l'adressage du compteur d'adresse 30 ainsi que le chargement de l'adresse du registre de commande concerné, 3 bits étant utilisés pour adresser les huit registres de commandes. Dans un second cycle sont effectués le décodage de l'adresse du registre de commande concerné, au moyen du décodeur d'adresse 31 représenté à la figure 3, et l'écriture des données dans le registre de commande ainsi sélectionné. Le compteur d'adresse 30 est incrémenté après l'écriture dans un registre de commande, il est donc possible d'écrire le registre suivant sans avoir à rentrer son adresse. Dans l'exemple de répartition des registres de commandes proposé, ayant un caractère non restrictif, à la ligne a, le premier registre a pour adresse 000 et permet de sélectionner l'horloge de débit binaire H (4 bits, D7-D4) et l'horloge de rythme HR (3 bits, D3-D1). A la ligne b le registre a pour adresse 001 et sélectionne l'horloge de multiplexage HM (3 bits, D7-D5) et l'horloge d'échantillonnage HS (2 bits D4-D3), 1 bit (D2) permet de sélectionner soit l'horloge terminal HT, soit l'horloge de réception HR puisque la boucle à verrouillage de phase d'émission 23 (figure 2) peut aussi être synchronisée sur l'une de ces deux horloges. Toujours à la ligne b, 1 bit (D1) autorise la fonction bouclage numérique BN. A la ligne c le registre a pour adresse 010 et permet de changer la configuration des filtres, 2 bits (D7-D6) pour le filtre passe-haut FPH, 2 bits (D5-D4) pour le filtre passe-bas FPB, 1 bit (D3) pour le filtre réjecteur de bande FRB, ce registre permet aussi au moyen d'1 bit (D2) d'orienter le commutateur 16 (figure 2) choisissant ainsi un mode avec ou sans annulation d'écho A.E. Le bit D1 permet de mettre hors service le filtre de reconstruction 14 (REC). A la ligne d le registre a pour adresse 011, 4 bits (D7-D4) permettent de programmer l'atténuateur de sortie (ATT) 9 (figure 2) par pas de 2 dB de 0 à 22 dB, les 4 dernières combinaisons de code réalisant une atténuation théoriquement infinie. Le bit D3 autorise la fonction bouclage analogique BA, alors que 2 bits (D2, D1) autorisent le test d'entrée d'émission TEM qui permet de vérifier le bon fonctionnement du filtre passe-bas d'émission 8 et de l'atténuateur 9 (figure 2).

A la ligne e le registre a pour adresse 100, 5 bits (D7-D3) permettent d'effectuer le contrôle automatique de gain CAG de l'amplificateur 16 (figure 2) de 0 à 46,5 dB par pas de 1,5 dB. A la ligne f, le registre a pour adresse 101, 2 bits (D7-D6) programment le niveau de détection des signaux DS du comparateur 18 (figure 2), un troisième bit (D5) réalise l'hystérésis HDS en modifiant légèrement le niveau du signal. A la ligne g, le registre a pour adresse 110, 5 bits (D7-D3) codent le circuit de saut de phase SP 27 de la boucle à verrouillage de phase de réception 24 (figure 2) de 1,5 à 24° par pas de 1,5°, puis de 22,5° à 360° pas pas de 22,5°, ceci pour un rythme de 1200 bauds. A la ligne h, le registre a pour adresse 111, 1 bit (D7) commande la mise en phase rapide MPR qui en fait est une remise à zéro de tous les diviseurs 25 de la boucle à verrouillage de phase d'émission 23 sur front descendant de HT ou HR pour assurer au départ une phase nulle, la boucle à verrouillage de phase 23 ensuite assurant les corrections, 1 bit (D6) commande le saut de phase CSP, 1 bit (D5) permet des commandes d'avance AV ou de retard RE provenant du processeur de signal enfin 1 bit (D4) sert à la validation V des commandes AV/RE, ces 3 derniers bits (D6, D5, D4) ne concernant que la programmation des horloges de réception. Le registre de commande 4h (figure 3) dont les bits de commande sont représentés à la ligne h est remis à zéro après l'exécution de chaque commande (signal RAZ).

La figure 9 propose à titre d'exemple non limitatif un code de programmation des horloges. Un multiplexeur par exemple, non représenté, permet de sélectionner les fréquences d'horloge désirées selon ledit code de programmation. Le bloc référencé a est relatif au codage possible du registre de commande représenté à la ligne a de la figure 8, la programmation des horloges de débit binaire (H) étant codée sur 4 bits (D7-D4), la programmation des horloges de rythme (HR) étant codée sur 3 bits (D3-D1). Le bloc référencé b est relatif au codage possible du registre de commande représenté à la ligne b de la figure 8, 3 bits (D7-D5) étant utilisés pour programmer les horloges de multiplexage (HM) et 2 bits (D4-D3) servant à programmer les horloges d'échantillonnage (HS). A chacun des codes correspond une fréquence issue des chaînes de diviseurs de fréquence émission et réception, ceci proportionnellement à une valeur de quartz donnée, trois valeurs de quartz sont proposées : 5,76 MHz, 5,40 MHz et 5,12 MHz, ces trois valeurs ne sont cependant pas limitatives.

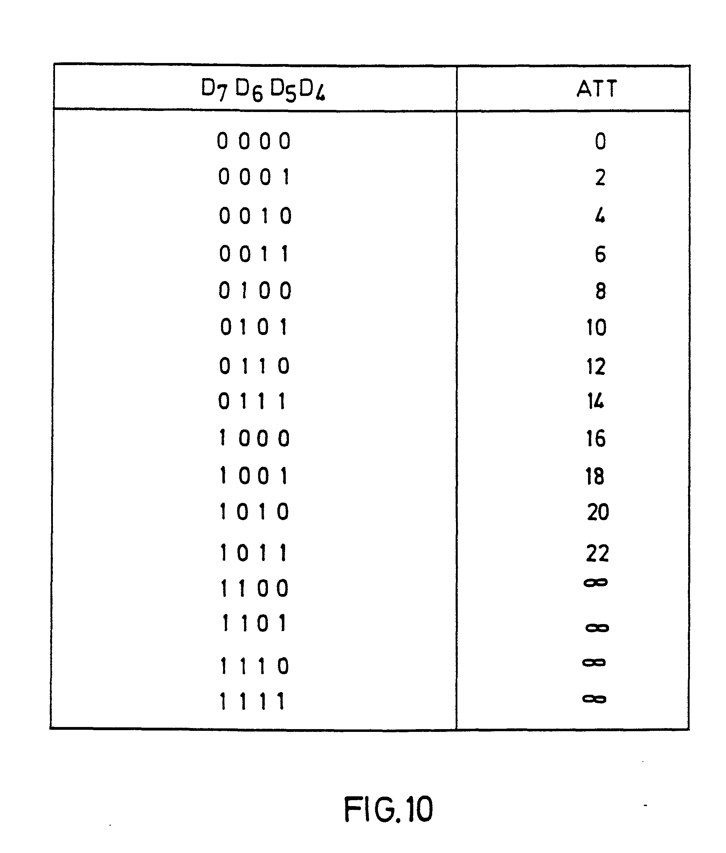

A la figure 10 est représenté un exemple non restrictif de code de programmation du registre de commande figurant à la ligne d de la figure 8 de l'atténuateur de sortie (ATT) 9. L'atténuation est codée sur 4 bits (D7-D4) par pas de 2 dB de 0 à 22 dB, les quatre dernières combinaisons réalisant une atténuation théoriquement infinie. A la mise sous tension l'atténuateur de sortie 9 est forcé en position d'atténuation infinie.

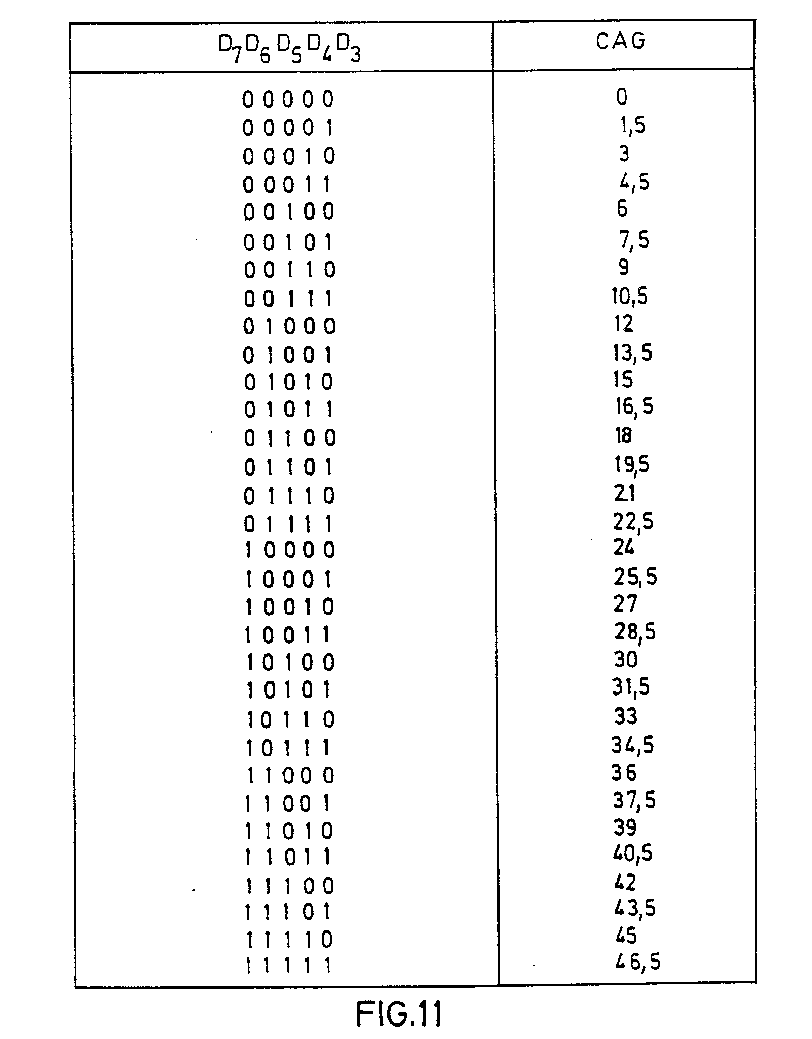

La figure 11 propose un exemple non restrictif de code de programmation du registre de commande représenté à la ligne e de la figure 8 du contrôle automatique de gain (CAG) 16. La programmation du gain de l'amplificateur est codée sur 5 bits (D7-D3) par pas de 1,5 dB de 0 à 46,5 dB.

La figure 12 montre un exemple non restrictif de code de programmation du registre de commande représenté à la ligne q de la figure 8 réalisable dans le circuit de saut de phase (SP) 26. La programmation des sauts de phase est codée sur 5 bits (D7-D3), elle se fait par pas de 1,5° de 0 à 24° ou par pas de 22,5° de 22,5° à 360°, le bit D7 permettant le choix du pas : D7 = 0, le pas est de 1,5° et D7 = 1, le pas est de 22,5°.

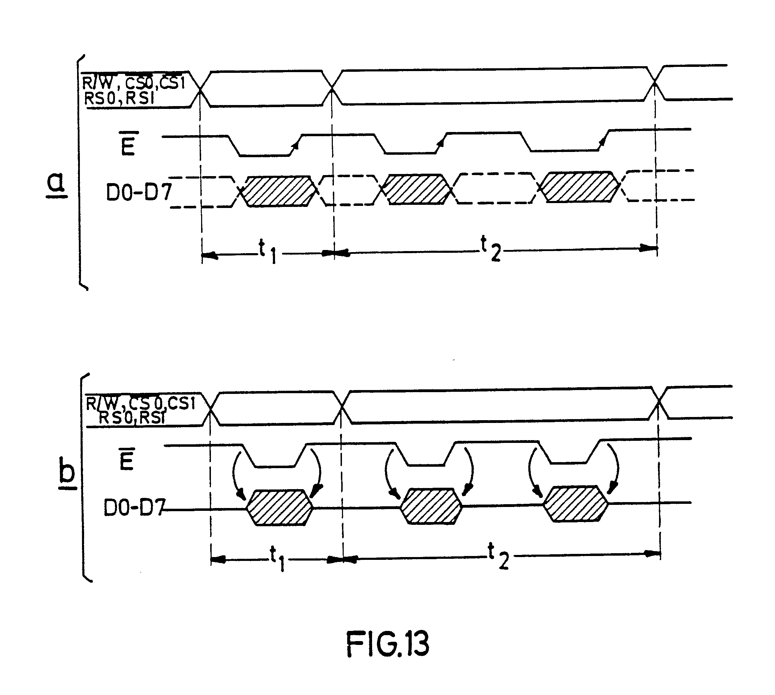

A la figure 13 sont représentés des chronogrammes décrivant les différents types d'échanges entre le CIA et le processeur de signal. Les chronogrammes référencés a sont relatifs à la phase d'écriture. En phase d'écriture le signal R/$\overline{W}$ = 0, le processeur de signal est adressé par les signaux $\overline{CS0}$ = 0 et $\overline{CS1}$ = 0. Le front montant du signal de validation $\overline{E}$ détermine l'instant de prise en compte des données alors présentes sur le bus D7-D0, qui sont ainsi écrites dans les registres d'émission 2. Les chronogrammes référencés b sont relatifs à la phase de lecture. En phase de lecture le signal R/$\overline{W}$ = 1, le CIA est alors adressé par les signaux $\overline{CS0}$ = 0 et CS1 = 1, lorsque le signal de validation $\overline{E}$ devient bas les données présentes dans les registres de réception 3 sont lues et transmises sur le BUS D7-D0. En fait l'entrée de validation $\overline{E}$ fixe l'instant où s'effectue le transfert des données après que les autres entrées aient été positionnées. Dès que le signal de validation $\overline{E}$ redevient haut les circuits trois-états 29 imposent un état haute impédance interrompant la transmission des données. Le temps t1 correspond à un temps d'accès simple, le temps t2 correspond à un temps de double accès.

La figure 14 montre les relations de phase entre les différents signaux synchrones des horloges d'échantillonnage HES et HRS. Comme les horloges d'échantillonnage HES et HRS sont plésiochrones, deux conversions successives sur le signal résiduel ou le signal reçu peuvent être nécessaires ce qui implique l'utilisation de la logique asynchrone de commande 20 (figure 2), des registres tampons 3c, 3d inclus dans les registres de réception et signal résiduel 3 (figure 3) et des registres tampons 2c, 2d inclus dans les registres d'émission et d'écho 2 (figure 3). A la ligne a de la figure 14 est représenté le signal d'horloge d'échantillonnage d'émission HES. A la ligne b se trouve le signal de commande HES (TE 2) du registre tampon d'écho 2d associé au registre d'écriture d'écho estimé 2b (figure 3). Sur le front descendant de HES on charge le mot de 12 bits correspondant à l'échantillon de l'écho estimé dans le registre tampon d'écho, sur le front descendant suivant de HES, la valeur convergie par le convertisseur numérique analogique 5 (figure 4) est échantillonnée par l'échantillonneur bloqueur 6 et maintenue pendant une période d'échantillonnage HES. Le signal de commande HES (S4) de l'échantillonneur bloqueur 6 est représenté à la ligne d. Le signal CNA à l'entrée du convertisseur numérique analogique 5, relatif au signal d'écho est représenté à la ligne f, le temps pendant lequel le signal d'écho est converti est référencé tEc. A la ligne c, se trouve le signal de commande HES (TE1) du registre tampon d'émission 2c associé au registre d'écriture d'émission 2a (figure 3). Sur le front descendant de HES on charge le mot de 12 bits correspondant à l'échantillon à émettre dans le registre tampon d'émission, sur le front montant suivant de HES la valeur convertie par le convertisseur numérique analogique 5 (figure 4) est échantillonée par l'échantilloneur bloqueur 7 et maintenue pendant une période d'échantillonnage HES. Le signal de commande HES (S1) de l'échantillonneur bloqueur 7 est représenté à la ligne e. Le signal CNA à l'entrée du convertisseur numérique analogique 5, relatif au signal d'émission est représenté à la ligne f, le temps pendant lequel le signal d'émission est converti est référencé t Em. A la ligne g est représenté le signal de commande HES (S2) de l'échantillonneur bloqueur 13 du signal résiduel, synchrone de l'horloge d'échantillonnage d'émission HES. Le front montant de HES (TE1) déclenche la commande de l'échantillonneur de signal résiduel HES (S2). La conversion analogique numérique CAN du signal résiduel est représentée à la ligne j. Le convertisseur analogique numérique 19 est multiplexé, il effectue sous le contrôle de la logique asynchrone de commande 20 les conversions du signal résiduel et du signal reçu. A la ligne h est représenté le signal d'horloge d'échantillonnage réception HRS (HES et HRS sont plésiochrones). Sur le front descendant de HRS est déclenché le signal de commande HRS (S3) (ligne i) de l'échantillonneur bloqueur 17 qui échantillonne le signal reçu. La conversion analogique numérique CAN du signal résiduel (ligne j) se fait sur le front montant de HES (S2) à condition que la logique asynchrone de commande 20 détecte une transition de l'horloge HES avant ou en même temps qu'une transition de l'horloge HRS. La conversion du signal résiduel se fait pendant le temps tRes. Si pendant la conversion, la logique asynchrone de commande a détecté le signal reçu, celui-ci est mémorisé et converti après la fin de conversion du signal résiduel. Le temps de conversion du signal reçu est référencé t Rec. Si par contre une transition de l'horloge HRS est détectée avant une transition de l'horloge HES c'est le signal reçu qui est converti avant le signal résiduel. Le signal résiduel est mémorisé et converti à son tour après la conversion du signal reçu. A la ligne k se trouve la commande HES (TR1) du registre tampon de signal résiduel 3c associé au registre d'écriture de signal résiduel 3a. A la fin de la conversion du signal résiduel est lancée la commande HES (TR1) et le chargement dans le registre tampon. A la ligne l se trouve la commande HES (TR2) du registre tampon du signal reçu 3d associé au registre d'écriture de signal reçu 3b. A la fin de la conversion du signal reçu est lancée la commande HRS (TR2) et le chargement dans le registre tampon. Le transfert du signal résiduel se fait ensuite en parfait synchronisme avec l'horloge HES sur un front descendant de HES. La commande du transfert se trouve à la ligne m et est référencée HES (Res). Le transfert du signal reçu se fait en parfait synchronisme avec l'horloge HRS sur un front descendant de HRS. La commande du transfert se trouve à la ligne n et est référencée HRS (Rec).

Le diagramme d'état de la logique asynchrone de commande 20 est représenté à la figure 15. Les signaux HRS (S3) m et HES (S2) m sont respectivement la mémorisation d'une prise d'échantillon du signal reçu et d'une prise d'échantillon du signal résiduel. On mémorise ainsi les conversions à effectuer. L'état E1 correspond à une conversion en cours (CONV = 1) du signal résiduel ou du signal reçu. A la fin de la conversion (CONV = 0), l'échantillon du signal résiduel ou du signal reçu converti est chargé dans le registre tampon correspondant (3b ou 3d et une repise à zéro de la mémorisation d'horloge est réalisée, c'est l'état E2. Puis à l'état E3, la logique asynchrone de commande attend de détecter une transition d'horloge. Si une transition de l'horloge d'émission HES est détectée, la logique asynchrone de commande 20 positionne l'interrupteur 21 vers la sortie de l'échantillonneur bloqueur 13 et lance la conversion, c'est l'état E4, puis l'échantillon est converti, c'est de nouveau l'état E1 et le cycle recommence. Si à l'état E3 une transition de l'horloge de réception HRS est détectée, la logique asynchrone 20 passe à l'état E5, positionne l'interrupteur 21 vers la sortie de l'échantillonneur bloqueur 17 et lance la conversion. L'échantillon est ensuite converti lorsque la logique asynchrone de commande repasse en son état E1, le cycle recommençant alors.

Un tel circuit est d'un grand intérêt quant à son utilisation dans les réseaux de télécommunication. Scrupuleusement conforme aux normes imposées par le CCITT, il permet avantageusement de s'adapter à tout type de modem tels que les modems conformes, par exemple et sans limitation, aux avis $V_{33}$, $V_{32}$, $V_{29}$, $V_{27}$, $V_{26}$, $V_{22}$ du CCITT.

## Revendications

1. Circuit d'interface analogique monolithique (CIA) entre un processeur de signal (PSI) et un réseau de télécommunication (LT), le processeur de signal comportant des accès pour une ligne BUS et opérant au moyen de signaux numériques, tandis que le réseau de télécommunication transmet des signaux de type analogique, ledit circuit d'interface analogique comportant des organes de conversion (5, 19) et de filtrage (8, 11, 14) ainsi que des organes réalisant des fonctions électroniques comme le contrôle automatique de gain (16), l'atténuation de signaux (9), la détection des signaux (18), la génération des fréquences d'horloge (23, 24, 25, 26, 27), caractérisé en ce que d'une part il est muni de registres d'émission et d'écho (2) adressés, connectés à la ligne BUS et constitués de registres d'écriture (2a, 2b) chacun associé à un registre tampon (2c, 2d), les registres tampons suivant les registres d'écriture et autorisant l'écriture des informations dans lesdits registres d'écriture sans contrainte de phase, les informations étant ensuite reconstituées et converties après multiplexage, en ce que d'autre part il est muni de registres de réception et de signal résiduel (3) adressés, connectés à la ligne BUS et constitués d'un registre d'écriture (3e) contenant l'information relative à la détection des signaux et de registres d'écriture (3a, 3b) associés à des registres tampons (3c, 3d), les registres tampons précédant les registres d'écriture et autorisant deux conversions subséquentes gérées par une logique asynchrone de commande (20), et en ce que de plus, il est muni de registres de commande (4) connectés à la ligne BUS adressés et décodés pour contenir des mots de commande agissant sur les divers organes pour les programmer en autorisant, entre autres, la sélection des horloges, le choix de la configuration des organes de filtrage, l'atténuation des signaux, et le contrôle automatique de gain.

2. Circuit d'interface analogique selon la revendication 1, comportant entre autres, des organes réalisant la génération de fréquences d'horloge (23, 24, 25, 26, 27), les horloges propres à l'émission étant distinctes des horloges propres à la réception, des organes de filtrage relatifs soit à l'émission (8) soit à la réception (11, 14), caractérisé en ce que les fréquences de fonctionnement desdits organes de filtrage relatifs soit à l'émission soit à la réception sont toutes issues des horloges (25) propres à l'émission.

3. Circuit d'interface analogique selon la revendication 1 ou 2, caractérisé en ce qu'i inclut d'autre part, des organes permettant de réaliser de manière simple les fonctions d'annulation d'écho et de réjection de voie de retour.

4. Circuit d'interface analogique selon l'une des revendications 1 à 3, comportant entre autres un organe de filtrage programmable passe-bande à capacités commutées (11), caractérisé en ce que ledit organe de filtrage est programmable par action sur les fréquences de fonctionnement et sur les capacités.

## Claims

1. A monolithic analog interface circuit (CIA) between a signal processor (PSI) and a telecommunication network (LT), where the signal processor comprises access means for a bus line and operates by means of digital signals and the telecommunication network transmits signals of the analog type, said interface circuit includes circuits for conversion (5, 19) and filtering (8, 11, 14) and also for performing electronic functions such as automatic gain control (16), signal attenuation (9), signal detection (18) and generation of clock frequencies (23, 24, 25, 26, 27) characterized in that it includes addressed send and echo signal registers (2) connected to the bus line and constituted by write registers (2a, 2b) associated each to a buffer register (2c, 2d), the buffer registers coming after the write registers and authorising the writing of bits of the information signals into the write registers without phase constraints, the bits of the information signals subsequently being reconstituted and converted after being multiplexed, in that the circuit also includes addressed receive and residual signal registers (3) connected to the bus line and constituted by a write register (3e) containing the information concerning the signal detection and write registers (3a, 3b) associated to buffer registers (3c, 3d), the buffer registers coming before the write registers and authorising two subsequent conversions controlled by an asynchronous control logis (20), and in that it further includes command registers (4) connected to the bus line and addressed and decoded for containing command words operating on the various circuits in order to program them by authorising, inter alia, the selection of the clocks, the choice of the configuration of the filtering circuits, the attenuation of the signals and the automatic gain control.

2. An analog interface circuit as claimed in Claim 1, comprising, inter alia, circuits for realising the generation of clock frequencies (23, 24, 25, 26, 27), the clock signals assigned to transmission being distinct from the clock signals assigned to reception, circuitry for filtering involved in either transmission (8) or reception (11, 14), characterized in that the operating frequencies of this filtering circuitry involved in either transmission or reception is derived from clock signals (25) used for transmission.

3. An analog interface circuit as claimed in Claim 1 or 2, characterized in that it also includes circuitry allowing of performing in a simple manner echo cancellation and return-path rejection functions.

4. An analog interface circuit as claimed in any one of the Claims 1 to 3, comprising, inter alia, a programmable switched-capacitor bandpass filtering circuit (11), characterised in that this filtering circuit is programmable by adjusting the operating frequencies and the capacitors.

## Patentansprüche

1. Analoge monolithische Schnittstellenschaltung (CIA) zwischen einem Signalprozessor (PSI) und einem Telekommunikationsnetz (LT), wobei der Signalprozessor Zugänge für eine BUS-Leitung enthält und mit digitalen Signalen betrieben wird, während das Telekommunikationsnetz analoge Signale überträgt, wobei die analoge Schnittstellenschaltung Umsetzungs- (5, 19) und Filterelemente (8, 11, 14) sowie elektronische Aufgaben ausführende Einheiten enthält, wie die automatische Verstärkungsregelung (16), die Signalabschwächung (9), die Signaldetektion (18), die Erzeugung der Taktfrequenzen (23, 24, 25, 26, 27), dadurch gekennzeichnet, daß einerseits adressierte Sende- und Echoregister (2) vorgesehen sind, die mit der BUS-Leitung verbunden sind und aus mit je einem Pufferregister (2c, 2d) assoziierten Schreibregistern (2a, 2b) bestehen, wobei die Pufferregister den Schreibregistern nachgeschaltet sind und das Einschreiben der Informationen in die Schreibregister ohne Phasenbeschränkung ermöglichen wonach die Informationen rekonstruiert und nach Verschachtelung umgesetzt werden, daß andererseits adressierte Empfangs- und Restsignalregistrer (3) vorgesehen sind, die mit der BUS-Leitung verbunden sind und aus einem die Information in bezug auf die Dewtektion der Signale enthaltenden Schreibregister (3e) und aus mit je einem Pufferregister (3c, 3d) assoziierten Schreibregister (3a, 3b) bestehen, wobei die Pufferregister den Schreibregistern vorgeschaltet sind und zwei durch eine asynchrone Behehlslogik (20) gesteuerte Umsetzungen ermöglicht, daß außerdem mit den BUS-Leitung verbundenen Befehlsregister (4) vorgesehen sind, die zum Enthalten der Befehlswörter adressiert und decodiert sind und die auf die verschiedenen Einheiten zum Programmieren einwirken und u. a. die Wahl der Taktsignale, die Wahl der Konfiguration der Filtereinheiten, die Abschwächung der Signale und die automatische Verstärkungsregelung autorisieren.

2. Analoge Schnittstellenschaltung nach Anspruch 1, u. a. mit Einheiten, die die Erzeugung der Taktfrequenzen (23, 24, 25, 26, 27) verwirklichen, wobei die zum Senden geeigneten Taktimpulse sich von den zum Empfangen geeigneten Taktimpulsen unterscheiden, und mit auf die Sendung (8) oder auf den Empfang (11, 14) bezüglichen Filtereinheiten, dadurch gekennzeichnet, daß alle Arbeitsfrequenzen der auf die Sendung oder auf den Empfang bezüglichen Filtereinheiten von den für die Sendung geeigneten Taktimpulsen (25) abgeleitet sind.

13

3. Analoge Schnittstellenschaltung nach Anspruch 1 oder 2, dadurch gekennzeichnet, daß sie zum anderen Einheiten enthält, die auf einfache Weise die Aufgaben der Echounterdrückung und Rückwegunterdrückung verwirklichen.

4. Analoge Schnittstellenschaltung nach Anspruch 1 bis 3, die u. a. eine programmierbare Bandpaßfiltereinheit (11) mit geschalteten Kondensatoren enthält, dadurch gekennzeichnet, daß die Filtereinheit durch Beeinflussung der Arbeitsfrequenzen und der Kondensatoren programmierbar ist.

FIG.1

# FIG.2

FIG.3

FIG.4

EP 0 175 410 B1

FIG. 5

# FIG.6

5,76 MHz
F

23

25

25a ÷5

25q ÷3

25h ÷3

25f ÷40

25b ÷2

288k

25v ÷8

25 ÷10

25k ÷10

25i ÷16

25c ÷2

144k

25r

8k

25w ÷4

144k

25d ÷2

72k

2k

6,4k

25s

19,2k

12k

÷2

25g

7,2k

25e ÷2

36k

25x ÷2

÷2

1k

3,2k

25t

25l ÷2

9,6k

6k

÷2 25j

÷2

1,6k

25u

÷2 25m

4,8k

÷2

0,8k

÷2 25n

2,4k

÷2 25o

0,2k

÷2 25p

0,6k

(100 Hz)

42

RAZ    MPR  HT  HR

FIG.7

$D_7-D_0$

$D_7-D_5$

| a | | | | | | | |
|---|---|---|---|---|---|---|---|
| H | H | H | H | HR | HR | HR | |

| | | |
|---|---|---|
| 0 | 0 | 0 |

| b | | | | | | | |
|---|---|---|---|---|---|---|---|
| HM | HM | HM | HS | HS | HT/HR | BN | |

| | | |
|---|---|---|
| 0 | 0 | 1 |

| c | | | | | | | |
|---|---|---|---|---|---|---|---|
| FPH | FPH | FPB | FPB | FRB | AE | REC | |

| | | |
|---|---|---|
| 0 | 1 | 0 |

| d | | | | | | | |
|---|---|---|---|---|---|---|---|
| ATT | ATT | ATT | ATT | BA | TEM | TEM | |

| | | |
|---|---|---|
| 0 | 1 | 1 |

| e | | | | | | | |
|---|---|---|---|---|---|---|---|
| CAG | CAG | CAG | CAG | CAG | | | |

| | | |
|---|---|---|
| 1 | 0 | 0 |

| f | | | | | | | |
|---|---|---|---|---|---|---|---|
| DS | DS | HDS | | | | | |

| | | |
|---|---|---|
| 1 | 0 | 1 |

| g | | | | | | | |
|---|---|---|---|---|---|---|---|
| SP | SP | SP | SP | SP | | | |

| | | |
|---|---|---|
| 1 | 1 | 0 |

| h | | | | | | | |
|---|---|---|---|---|---|---|---|
| MFR | CSP | AV/RE | V | | | | |

| | | |
|---|---|---|
| 1 | 1 | 1 |

5

30

FIG.8

| D7 | D6 | D5 | D4 | 5,76 MHz | 5,40 MHz | 5,12 MHz | | |
|----|----|----|----|----------|----------|----------|---|---|
| 0 | 0 | 0 | 0 | 19,2 K | | | | |
| 0 | 0 | 0 | 1 | 16,8 K | | | | |
| 0 | 0 | 1 | 0 | 14,4 K | | | | |
| 0 | 0 | 1 | 1 | 12 K | | | | |
| 0 | 1 | 0 | 0 | 9,6 K | | | | |
| 0 | 1 | 0 | 1 | 7,2 K | | 6,4 K | H | |
| 0 | 1 | 1 | 0 | 6,4 K | | | | |
| 0 | 1 | 1 | 1 | 6 K | | | | |
| 1 | 0 | 0 | 0 | 4,8 K | | | | a |
| 1 | 0 | 0 | 1 | 3,2 K | 3 K | | | |
| 1 | 0 | 1 | 0 | 2,4 K | | | | |
| 1 | 0 | 1 | 1 | 1,2 K | | | | |
| 1 | 1 | 0 | 0 | 0,6 K | | | | |

| D3 | D2 | D1 | 5,76 MHz | 5,40 MHz | 5,12 MHz | |
|----|----|----|----------|----------|----------|---|
| 0 | 0 | 0 | 2,4 K | | 2,133K | |
| 0 | 0 | 1 | 2,0 K | | | |
| 0 | 1 | 0 | 1,6 K | 1,5K | | HR |
| 0 | 1 | 1 | 1,2 K | | | |
| 1 | 0 | 0 | 0,6 K | | | |

| D7 | D6 | D5 | | |
|----|----|----|----------|---|
| 0 | 0 | 0 | 288 K | |
| 0 | 0 | 1 | 57,6 K | |
| 0 | 1 | 1 | 12 K | |
| 0 | 1 | 1 | 9,6 K | |
| 1 | 0 | 0 | 7,2 K | HM |
| 1 | 0 | 1 | 4,8 K | |
| 1 | 1 | 0 | 7,4 K | |
| 1 | 1 | 1 | 1,2 K | |

b

| D4 | D3 | 5,76 MHz | 5,40 MHz | 5,12 MHz | |
|----|----|----------|----------|----------|---|
| 0 | 0 | 9,6 K | 9 K | 8,533K | |
| 0 | 1 | 8 K | 7,5 K | | HS |
| 1 | 0 | 7,2 K | | | |

FIG.9

| $D_7 D_6 D_5 D_4$ | ATT |
|---|---|
| 0 0 0 0 | 0 |
| 0 0 0 1 | 2 |
| 0 0 1 0 | 4 |
| 0 0 1 1 | 6 |
| 0 1 0 0 | 8 |
| 0 1 0 1 | 10 |
| 0 1 1 0 | 12 |
| 0 1 1 1 | 14 |
| 1 0 0 0 | 16 |
| 1 0 0 1 | 18 |
| 1 0 1 0 | 20 |
| 1 0 1 1 | 22 |
| 1 1 0 0 | ∞ |
| 1 1 0 1 | ∞ |
| 1 1 1 0 | ∞ |
| 1 1 1 1 | ∞ |

FIG.10

| $D_7 D_6 D_5 D_4 D_3$ | CAG |
|---|---|
| 0 0 0 0 0 | 0 |
| 0 0 0 0 1 | 1,5 |
| 0 0 0 1 0 | 3 |
| 0 0 0 1 1 | 4,5 |
| 0 0 1 0 0 | 6 |
| 0 0 1 0 1 | 7,5 |
| 0 0 1 1 0 | 9 |
| 0 0 1 1 1 | 10,5 |
| 0 1 0 0 0 | 12 |
| 0 1 0 0 1 | 13,5 |
| 0 1 0 1 0 | 15 |
| 0 1 0 1 1 | 16,5 |
| 0 1 1 0 0 | 18 |
| 0 1 1 0 1 | 19,5 |
| 0 1 1 1 0 | 21 |
| 0 1 1 1 1 | 22,5 |
| 1 0 0 0 0 | 24 |
| 1 0 0 0 1 | 25,5 |
| 1 0 0 1 0 | 27 |
| 1 0 0 1 1 | 28,5 |
| 1 0 1 0 0 | 30 |
| 1 0 1 0 1 | 31,5 |
| 1 0 1 1 0 | 33 |
| 1 0 1 1 1 | 34,5 |
| 1 1 0 0 0 | 36 |
| 1 1 0 0 1 | 37,5 |
| 1 1 0 1 0 | 39 |
| 1 1 0 1 1 | 40,5 |
| 1 1 1 0 0 | 42 |
| 1 1 1 0 1 | 43,5 |
| 1 1 1 1 0 | 45 |
| 1 1 1 1 1 | 46,5 |

FIG.11

| $D_7 D_6 D_5 D_4 D_3$ | SP |
|:---:|:---:|
| 0 0 0 0 0 | 1,5 |
| 0 0 0 0 1 | 3 |
| 0 0 0 1 0 | 4,5 |
| 0 0 0 1 1 | 6 |
| 0 0 1 0 0 | 7,5 |
| 0 0 1 0 1 | 9 |
| 0 0 1 1 0 | 10,5 |
| 0 0 1 1 1 | 12 |
| 0 1 0 0 0 | 13,5 |
| 0 1 0 0 1 | 15 |
| 0 1 0 1 0 | 16,5 |
| 0 1 0 1 1 | 18 |
| 0 1 1 0 0 | 19,5 |
| 0 1 1 0 1 | 21 |
| 0 1 1 1 0 | 22,5 |
| 0 1 1 1 1 | 24 |
| 1 0 0 0 0 | 22,5 |
| 1 0 0 0 1 | 45 |
| 1 0 0 1 0 | 67,5 |
| 1 0 0 1 1 | 90 |
| 1 0 1 0 0 | 112,5 |
| 1 0 1 0 1 | 135 |
| 1 0 1 1 0 | 157,5 |
| 1 0 1 1 1 | 180 |
| 1 1 0 0 0 | 202,5 |
| 1 1 0 0 1 | 225 |
| 1 1 0 1 0 | 247,5 |
| 1 1 0 1 1 | 270 |
| 1 1 1 0 0 | 292,5 |
| 1 1 1 0 1 | 315 |
| 1 1 1 1 0 | 337,5 |
| 1 1 1 1 1 | 360 |

FIG.12

FIG.13

FIG.14

E1

CONV=1

CONV= 0

E2

E3

E5

E4

HRS(S$_3$)m =1
et
  HES(S$_2$) m =0

HES (S$_2$) m =1

FIG.15